(19) **Europäisches Patentamt**

**European Patent Office**

**Office européen des brevets**

(11) **EP 1 535 388 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(21) Anmeldenummer: **04733791.0**

(22) Anmeldetag: **19.05.2004**

(51) Int Cl.:
***H02P 6/00*** *(2006.01)*

(86) Internationale Anmeldenummer:
**PCT/EP2004/005389**

(87) Internationale Veröffentlichungsnummer:
**WO 2005/018084 (24.02.2005 Gazette 2005/08)**

(54) **Verfahren und Vorrichtung zur Drehzahlregelung eines mit Hilfsmoment arbeitenden zweipulsigen Motors**

Speed control method and device for a two-pulse motor operating with auxiliary torque

Procédé et dispositif pour regler le regime d'un moteur à double impulsion fonctionnant avec un couple auxiliaire

(84) Benannte Vertragsstaaten:
**AT BE BG CH CY CZ DE DK EE ES FI FR GB GR HU IE IT LI LU MC NL PL PT RO SE SI SK TR**

(30) Priorität: **18.07.2003 DE 10334030**

(43) Veröffentlichungstag der Anmeldung:
**01.06.2005 Patentblatt 2005/22**

(73) Patentinhaber: **ebm-papst St. Georgen GmbH & Co. KG**
**78112 St. Georgen (DE)**

(72) Erfinder:
• **BERROTH, Hansjörg**
**78052 VS-Obereschach (DE)**
• **JESKE, Frank**
**78112 St. Georgen (DE)**
• **RAPPENECKER, Hermann**
**78147 Vöhrenbach (DE)**

(74) Vertreter: **Raible, Hans**
**Raible & Raible**
**Patentanwälte**
**Schoderstrasse 10**
**70192 Stuttgart (DE)**

(56) Entgegenhaltungen:
**US-A- 4 376 261**

**Beschreibung**

Die Erfindung betrifft ein Verfahren zur Regelung der Drehzahl eines mit einem invarianten Hilfsmoment arbeitenden zweipulsigen Motors, und sie betrifft einen zweipulsigen elektronisch kommutierten Motor, welcher mit einem invarianten Hilfsmoment arbeitet und eine Regeleinrichtung zur Regelung seiner Drehzahl aufweist. Als invariantes Hilfsmoment wird gewöhnlich ein sogenanntes Reluktanzmoment verwendet, doch ist die Erfindung nicht hierauf beschränkt, sondern ein solches Hilfsmoment könnte auch mechanisch erzeugt werden, z.B. durch eine Nockenkurve.

Zweipulsige elektronisch kommutierte Motoren mit Reluktanz-Hilfsmoment sind preiswert, weil sie im Vergleich mit mehrphasigen Motoren gleicher Baugröße preiswerter hergestellt werden können, und weil diese Motor-Bauart einfach und robust ist. Solche Motoren werden deshalb häufig zum Antrieb von Lüftern verwendet, z.B. für die Kühlung im IT-Bereich.

Ein Verfahren zur Drehzahlregelung von zweipulsigen elektronisch kommutierten Motoren ist aus US 4 376 261 bekannt.

Bedingt durch ihr Hilfsmoment haben derartige Motoren eine Drehrichtung, in der sie leicht anlaufen, weil der Anlauf durch das Hilfsmoment unterstützt wird. Diese Drehrichtung wird auch als Vorzugsrichtung bezeichnet. Dagegen ist in der zur Vorzugsrichtung entgegengesetzten Richtung, auch Reversrichtung genannt, der Anlauf schwierig. Ein Vierquadrantenbetrieb solcher Motoren stößt zudem deshalb auf Schwierigkeiten, weil es Drehzahlbereiche gibt, wo eine Regelung aus verschiedenen Gründen nicht möglich ist, u.a. deshalb, weil, bedingt durch das Hilfsmoment und seine Wechselwirkung mit dem elektromagnetischen Antriebsmoment, bei einem solchen Motor niedrige Drehzahlen nicht regelbar sind. Der Grund hierfür ist, dass die Größe des Hilfsmoments durch den Drehzahlregler nicht beeinflusst werden kann und quasi eine feste Größe ist.

Bedingt durch diesen unteren Drehzahlbereich, in welchem eine Regelung nicht möglich ist, entsteht um die Drehzahl Null herum eine Lücke im Betriebsbereich. Hierdurch ergeben sich besonders dann Schwierigkeiten, wenn die Drehrichtung umgekehrt werden soll, z.B. wenn von einer Drehzahl von 3000 U/min in Vorzugsrichtung umgeschaltet werden soll auf 3000 U/min in Reversrichtung.

Es ist deshalb eine Aufgabe der Erfindung, ein neues Verfahren und einen neuen Motor der eingangs genannten Art bereitzustellen.

Nach der Erfindung wird diese Aufgabe gelöst durch den Gegenstand des Anspruchs 1. Dadurch, dass der Motor unterhalb einer vorgegebenen Mindestdrehzahl mit einem von der gewünschten Drehzahl unabhängigen Strom angetrieben wird, kann der Anlauf in einem Drehzahlfenster, das durch die Mindestdrehzahl definiert ist, mit einem vom Regler nicht beeinflussten hohen Drehmoment erfolgen. Nach Verlassen dieses Drehzahlfensters geht der Motor in den geregelten Betrieb über, um die gewünschte Drehzahl ("Soll-Drehzahl") zu erreichen, und dies geschieht in der Weise, dass dann der Stellwert abhängig von der Differenz zwischen gewünschter Drehzahl und tatsächlicher Drehzahl eingestellt wird, also eine Drehzahlregelung stattfindet, bevorzugt durch einen PI-Regler.

Bei einer sehr vorteilhaften Weiterbildung der Erfindung wird der Stellwert (und damit der dem Motor zugeführte Strom) als Funktion der Differenz zwischen gewünschter Drehzahl und tatsächlicher Drehzahl fortlaufend berechnet, aber für den Regelvorgang erst bei oder nach Erreichen der Mindestdrehzahl verwendet. Dadurch steht nach Verlassen des erwähnten Drehzahlfensters sofort ein bereits berechneter Stellwert für die Drehzahlregelung zur Verfügung.

Eine andere Lösung der gestellten Aufgabe ist Gegenstand des Patentanspruchs 10. Ein solcher Motor hat ein Drehzahlfenster, das er beim Anlauf ohne Drehzahlregelung durchläuft, und erst nach Verlassen dieses Fensters setzt die Drehzahlregelung ein. Daraus ergibt sich gleichzeitig, dass innerhalb des Fensters eine Drehzahlregelung nicht möglich ist, weshalb eine gewünschte Drehzahl, die innerhalb dieses Fensters liegt, als Drehzahl Null interpretiert wird, also als eine Drehzahl, die nicht dargestellt werden kann.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:

Fig. 1 ein Übersichtsschaltbild einer bevorzugten Ausführungsform einer Brückenschaltung für einen zweipulsigen ECM kleiner Leistung,

Fig. 2 ein Schaltbild mit den Anschlussbezeichnungen eines beim Ausführungsbeispiel verwendeten Mikrocontrollers 76,

Fig. 3 ein Schaltbild einer Hilfsschaltung, welche an den Eingang RAO des Mikrocontrollers 76 angeschlossen ist; dieser Eingang RAO ist der Eingang eines A/D-Wandlers,

Fig. 4 ein Schaltbild der Beschaltung des Eingangs RB1, alternativ des Eingangs RB7, des Mikrocontrollers 76,

Fig. 5 ein Schaltbild , welches zeigt, wie aus den Ausgangssignalen eines Hallgenerators 6 ein Frequenzsignal abgeleitet und dem Eingang RB0 des Mikrocontrollers 76 zugeführt wird, wo dieses Signal in Hall-Interrupts umgesetzt wird,

Fig. 6 ein Gesamtschaltbild der verwendeten Hardware; hier werden dieselben Bezugszeichen verwendet wie in den vorhergehenden Figuren 1 bis 5,

Fig. 7 eine Prinzipdarstellung eines 1-Quadranten-Reglers (1-Q-Reglers),

Fig.8 eine Prinzipdarstellung eines 2-Q-Reglers,

Fig. 9 eine Prinzipdarstellung eines 4-Q-Reglers,

Fig. 10 eine Darstellung des Verlaufs interner Signale bei einem Übergang von +3000 nach -3000 U/min,

Fig. 11 ein Zustandsdiagramm, welches die Änderung der Zustände bei verschiedenen Betriebszuständen zeigt,

Fig. 12 eine schematisierte Darstellung des Anlaufvorgangs in Reversrichtung,

Fig. 13 eine schematisierte Darstellung eines typischen Verlaufs eines Reluktanzmoments,

Fig. 14 ein Flussdiagramm einer Routine für den Vergleich zwischen der tatsächlichen Drehrichtung und einer vom Benutzer eingestellten Drehrichtung,

Fig. 15 ein Flussdiagramm einer Routine für die Ermittlung des Motorstatus,

Fig. 16 & 17 ein Flussdiagramm für die Diskriminierung zwischen verschiedenen Betriebszuständen eines Motors,

Fig. 18 eine schematische Darstellung der bei der Kommutierung des Motors verwendeten Größen und ihrer Verwendung, und

Fig. 19 ein Flussdiagramm RGL, welches Rechenvorgänge bei der Drehzahlregelung eines Motors zeigt.

In der nachfolgenden Beschreibung werden für gleiche oder gleich wirkende Teile oder Funktionen dieselben Bezugszeichen verwendet, und diese werden gewöhnlich nur einmal beschrieben. Bei der Beschreibung von Drehzahlen und ihren Änderungen folgen wir dem Sprachgebrauch, d.h. wenn sich der Rotor schneller dreht, egal in welcher Richtung, sprechen wir von einer Erhöhung der Drehzahl. Folgende Abkürzungen werden verwendet:

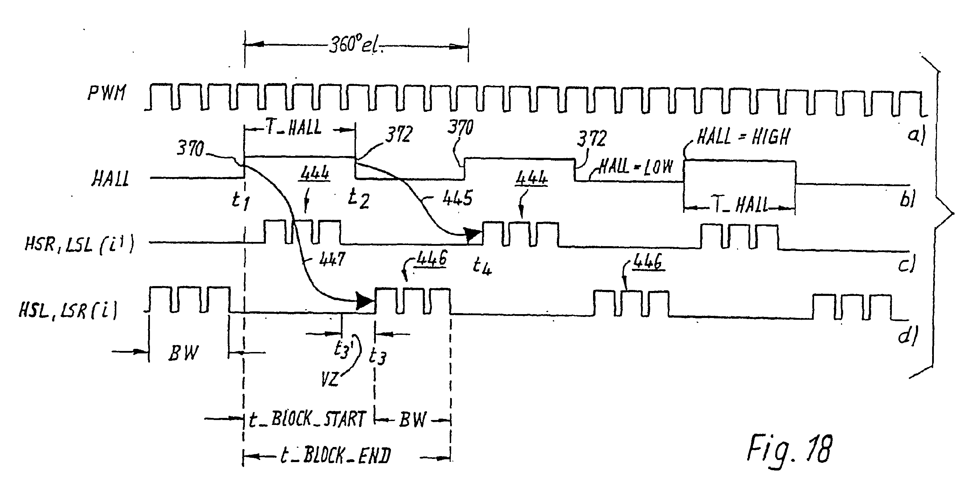

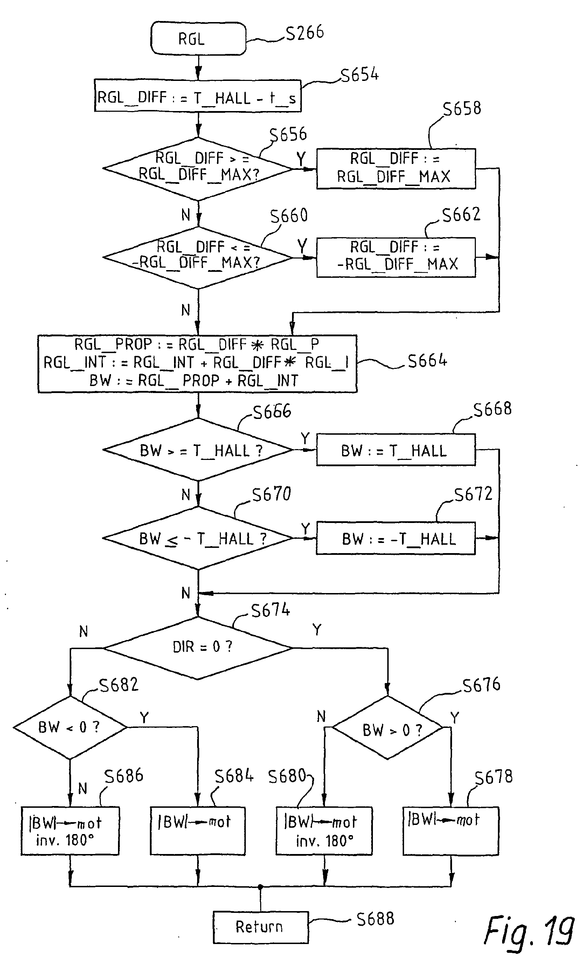

Y JA
N NEIN
n tatsächliche Drehzahl, Istdrehzahl; wird als Zeit T_HALL gemessen
$n_{soll}$ gewünschte Drehzahl, Solldrehzahl; wird als Zeit t_s vorgegeben
BW Blocklänge eines im Motor 30 fließenden Stromimpulses, vgl. Fig. 18. Diese Blocklänge stellt den sogenannten "Stellwert" des Drehzahlreglers dar und wird mit dem Flussdiagramm der Fig. 19 berechnet. Bei BW=Max wird BW auf einen Wert eingestellt, der z.B. etwas kleiner als T_HALL ist.
DIR Richtungsbefehl für Drehrichtung (von außen vorgegeben)
$DIR_{ist}$ aktueller Wert der Drehrichtung
$DIR_{soll}$ gewünschter Wert der Drehrichtung
inv. 180° Umschaltung der Kommutierung auf das Gegenteil der augenblicklichen Kommutierung. In Fig. 18 kommt innerhalb des Bereichs, der mit 360° el. bezeichnet ist, als erstes ein Stromimpuls 444 (Strom i') und dann ein Stromimpuls 446 (Strom i). Nach Umschalten durch "inv. 180°" kommt als erstes ein Impuls 446 und danach ein Impuls 444, so dass der Motor in umgekehrter Richtung angetrieben wird. Durch erneutes Umschalten mit "inv. 180°" wird der Zustand nach Fig. 18 wieder hergestellt. Vgl. hierzu die Gleichungen (5), (6), (11), (12) und die Erläuterungen zu Fig. 19.

Beim Ausführungsbeispiel bedeuten:

DIR = 0 Befehl: Gewünschter Lauf in Vorzugsrichtung

| | |
|---|---|
| DIR = 1 | Befehl: Gewünschter Lauf entgegen der Vorzugsrichtung, also in Reversrichtung |
| Rt | Richtungsflag. Der Wert von Rt wird erst gespeichert, wenn bestimmte Bedingungen erfüllt sind und kann sich deshalb von DIR unterscheiden. |
| Rt = 0 | Vorzugsrichtung |
| Rt = 1 | Reversrichtung. |
| Rs | Flag, das anzeigt, ob der Motor ungeregelt oder geregelt laufen soll. |
| Rs = 0 | Ungeregelter Lauf in der gewünschten Drehrichtung mit max. Strom |
| Rs = 1 | Lauf in der gewünschten Drehrichtung mit geregelter Drehzahl |
| $N_{MIN}$ | Mindestdrehzahl. Bei steigender Drehzahl lnl unterhalb von $|N_{MIN}|$ läuft der Motor ungeregelt mit maximalem Strom, und bei Drehzahlen darüber mit Drehzahlregelung. |
| T_HALL | Zeit, die der Rotor für das Durchlaufen eines vorgegebenen Drehwinkels benötigt, der durch zwei Änderungen eines Rotorstellungssignals HALL definiert ist. Beim Ausführungsbeispiel entspricht T_HALL der Zeit für ein Viertel einer vollen Rotorumdrehung. T_HALL wird als Maß für die aktuelle Drehzahl n verwendet, vgl. die Gleichungen (9) und (10). |
| t_s | Soll-Zeit, die dem Drehzahlregler (Fig. 19) als gewünschter Wert für die Drehzahl vorgegeben wird, und die der Zeit für ein Viertel einer vollen Rotorumdrehung bei $n_{soll}$ entspricht. |
| RGL_DIFF | Regeldifferenz. (Differenz zwischen T_HALL und t_s, vgl. S654 in Fig. 19.) |
| RGL_P | Proporzionalfaktor des Drehzahlreglers |
| RGL_I | Integralfaktor des Drehzahlreglers, vgl. S664 in Fig. 19. |

Zum Stellwert BW ist zu bemerken, dass dieser die Länge eines Stromimpulses (i oder i') festlegt, wobei dieser Stromimpuls mit der Länge BW seinerseits durch die PWM-Steuerung aus kürzeren Stromimpulsen zusammengesetzt sein kann, und durch die Vorgänge beim Abschalten der Stromimpuls etwas länger ist als BW.

## Die Hardware

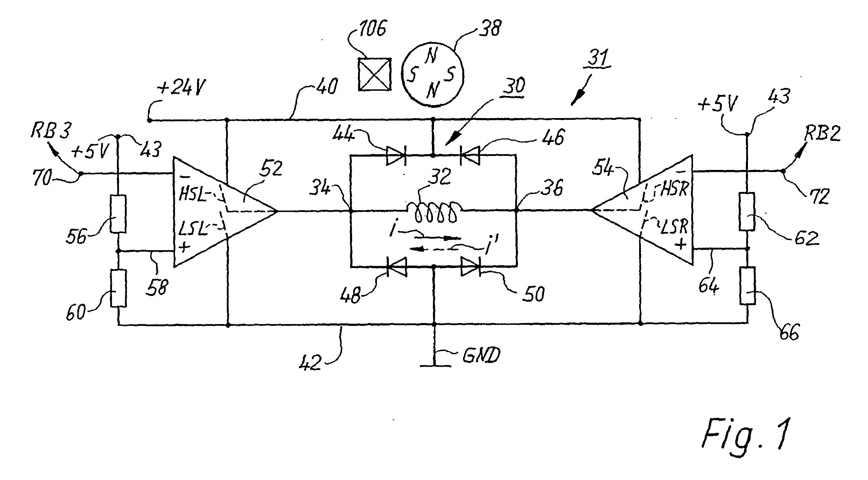

**Fig. 1** zeigt symbolisch die Grundstruktur eines zweipulsigen elektronisch kommutierten Motors 30, der bei diesem bevorzugten Ausführungsbeispiel mit einer Vollbrückenschaltung 31 dargestellt ist und deshalb nur einen einzigen Wicklungsstrang 32 mit zwei Anschlüssen 34, 36 hat, ferner einen permanentmagnetischen Rotor 38, der als vierpoliger Rotor dargestellt ist. Wenn sich der Rotor 38 dreht, wird der Wicklungsstrang 32 abwechselnd von Stromimpulsen i von links nach rechts und von Stromimpulsen i' von rechts nach links durchflossen. "Zweipulsig" heißt ein solcher Motor, weil während einer Rotordrehung von 360° el. ein Impuls i und ein Impuls i' fließen, also zwei Impulse, vgl. Fig. 18. Man kann auch einen ersten Wicklungsstrang für die Impulse i und einen zweiten Strang für die Impulse i' vorsehen, wie das dem Fachmann bekannt ist. Ein zweipulsiger Motor kann also ein- oder zweisträngig sein.

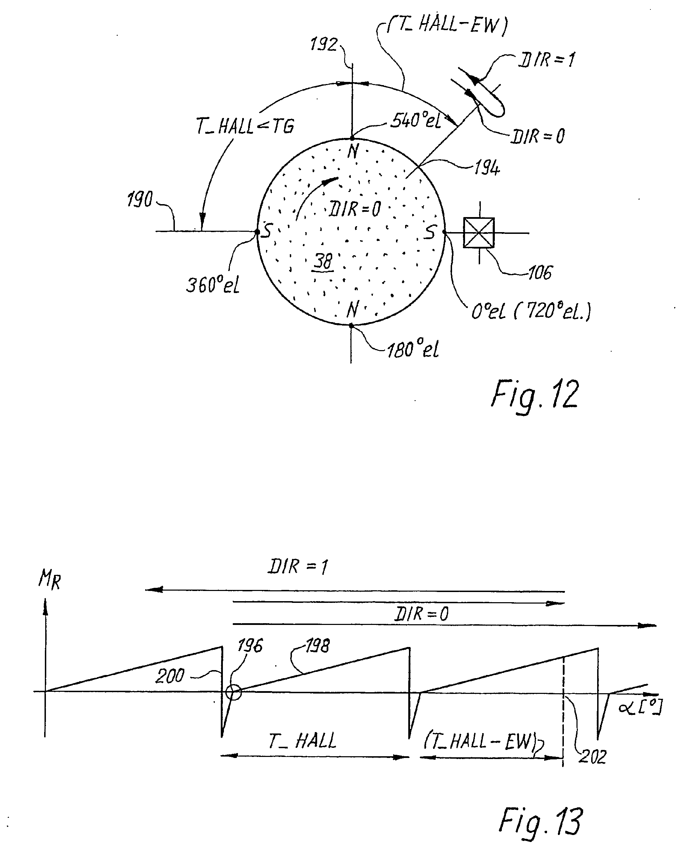

Für die Zwischenzeit zwischen zwei Impulsen i, i' (oder i' und i), in der kein Strom fließt, braucht der Motor zu seinem Antrieb ein Hilfsmoment, das man als Reluktanzmoment $M_R$ bezeichnet, vgl. Fig. 13, weil es durch die Wechselwirkung des permanentmagnetischen Rotors 38 mit am Stator vorgesehenen Eisenmassen entsteht, z.B. mit dem Blechpaket (lamination stack) des Stators. Solche Motoren sind in Stückzahlen von Hunderten von Millionen gefertigt worden, weshalb es nicht nötig erscheint, sie in allen ihren vielen Varianten zu beschreiben.

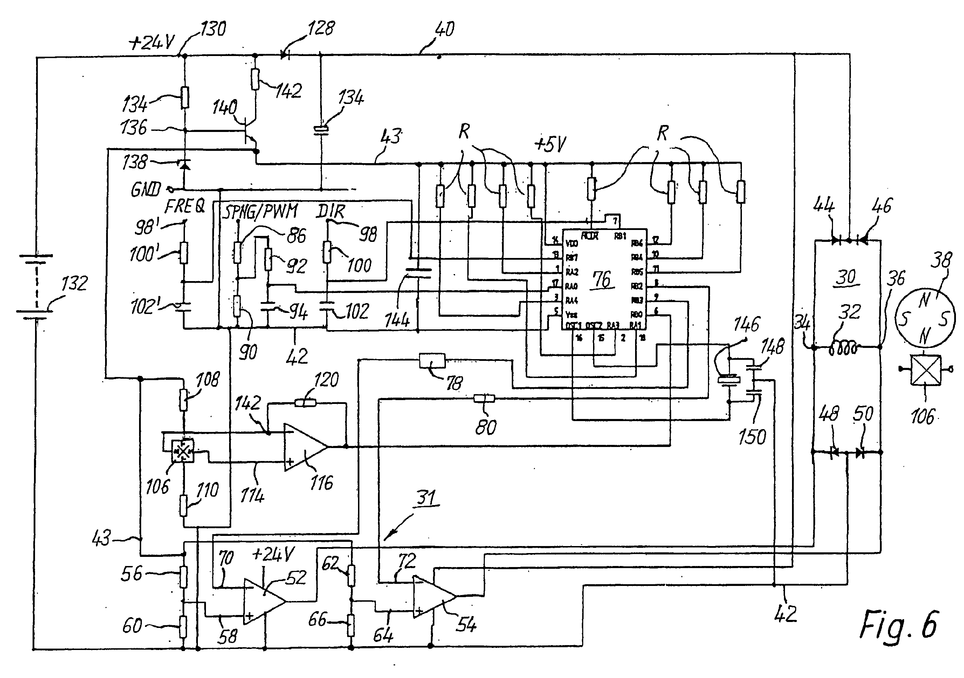

Der Motor 30 wird aus einem Gleichstromnetz mit einer Plusleitung 40 (z.B. + 24 V) und einer Minusleitung 42 (GND) mit Strom versorgt. Ferner ist eine Spannungsquelle mit einer geregelten Hilfsspannung von z.B. +5 V vorgesehen, deren Ausgang mit 43 bezeichnet ist. Diese wird nachfolgend bei Fig. 6 beschrieben.

Dem Wicklungsstrang 32 sind vier Freilaufdioden 44, 46, 48, 50 zugeordnet. Die Katoden der Dioden 44, 46 sind mit der Plusleitung 40 verbunden, die Anoden der Dioden 48, 50 mit der Minusleitung 42. Die Anode der Diode 44 und die Katode der Diode 48 sind mit dem Anschluss 34 verbunden. Die Anode der Diode 46 und die Katode der Diode 50 sind mit dem Anschluss 36 verbunden.

Zur Steuerung der Ströme i, i' dienen bei diesem Beispiel zwei Leistungs-Operationsverstärker (OPV) 52, 54. Bei dieser bevorzugten Ausführungsform sind sie als Komparatoren bzw. als invertierende Verstärker geschaltet. Der Ausgang des OPV 52 ist mit dem Anschluss 34 verbunden, der Ausgang des OPV 54 mit dem Anschluss 36. Naturgemäß kann die Brückenschaltung auch mit anderen Halbleiterelementen ausgeführt werden.

Vom Anschluss 43 (+ 5 V) führt ein Widerstand 56 zum Pluseingang 5 des OPV 52, und von dort führt ein Widerstand 60 zur Minusleitung 42.

Ebenso führt vom Anschluss 43 (+ 5 V) ein Widerstand 62 zum Pluseingang 64 des OPV 54, und von dort führt ein Widerstand 66 zur Minusleitung 42.

## Bevorzugte Werte der Bauelemente in Fig. 1

| Widerstände 56, 60, 62, 66 | ...22 kOhm |
|---|---|
| Operationsverstärker 52, 54 | ...L2720, Hersteller: SGS |

Diese Operationsverstärker enthalten bevorzugt einen eingebauten Strombegrenzer, um eine Überlastung zu verhindern.

Da alle Widerstände gleich groß sind, erhält man an den Pluseingängen beider OPV 52, 54 ein Potenzial von + 2,5 V.

Dem Minuseingang 70 des OPV 52 wird ein Steuersignal zugeführt, das entweder größer oder kleiner als 2,5 V ist, und dasselbe gilt für den Minuseingang 72 des OPV 54.

Zur Ansteuerung wird entweder an den Eingang 70 ein Potenzial von > 2,5 V gelegt, so dass der Punkt 34 mit der Minusleitung 42 verbunden wird, und an den Eingang 72 wird dann ein Potenzial von < 2,5 V gelegt, so dass sein Ausgang mit der Plusleitung 40 verbunden wird, also hier mit +24 V. In diesem Fall fließt ein Strom i' von der Plusleitung 40 über den OPV 54, die Anschlüsse 36, 34 und den OPV 52 zur Minusleitung 42. Im umgekehrten Fall liegt der Eingang 70 an einem Potenzial <2,5 V und der Eingang 72 an einem Potenzial >2,5 V, so dass ein Strom i vom Anschluss 34 zum Anschluss 36 fließt.

Zur Veranschaulichung sind in Fig. 1 Schalter gestrichelt eingezeichnet. Im OPV 52 sind das ein oberer Schalter HSL und ein unterer Schalter LSL. Im OPV 54 sind das ein oberer Schalter HSR und ein unterer Schalter LSR. Es bedeuten

| HSL | High Side Left |
|---|---|
| HSR | High Side Right |
| LSL | Low Side Left |
| LSR | Low Side Right |

Wenn HSL und LSR eingeschaltet sind, fließt ein Strom i, und wenn HSR und LSL eingeschaltet sind, fließt ein Strom i'.

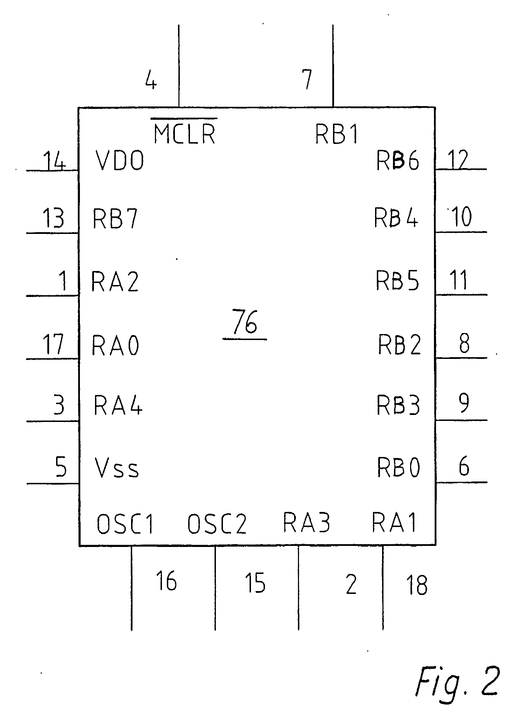

**Fig. 2** zeigt das Anschlussschema eines beim vorliegenden Ausführungsbeispiel verwendeten Mikrocontrollers 76 vom Typ PIC16C711. Die Anschlüsse sind in der üblichen Weise mit Zahlen und mit Buchstaben bezeichnet. Wie aus Fig. 6 hervorgeht, ist der Anschluss 70 des OPV 52 über einen Widerstand 78 mit dem Ausgang RB3 des $\mu$C 76 verbunden, und der Anschluss 72 über einen Widerstand 80 mit dem Ausgang RB2, d.h. die Vollbrückenschaltung 31 der Fig. 1 wird direkt vom $\mu$C 76 und seinem Steuerprogramm gesteuert. Letzteres wird nachfolgend unter "Software" beschrieben. Die Widerstände 78 und 80 können z.B. je 10 kOhm haben.

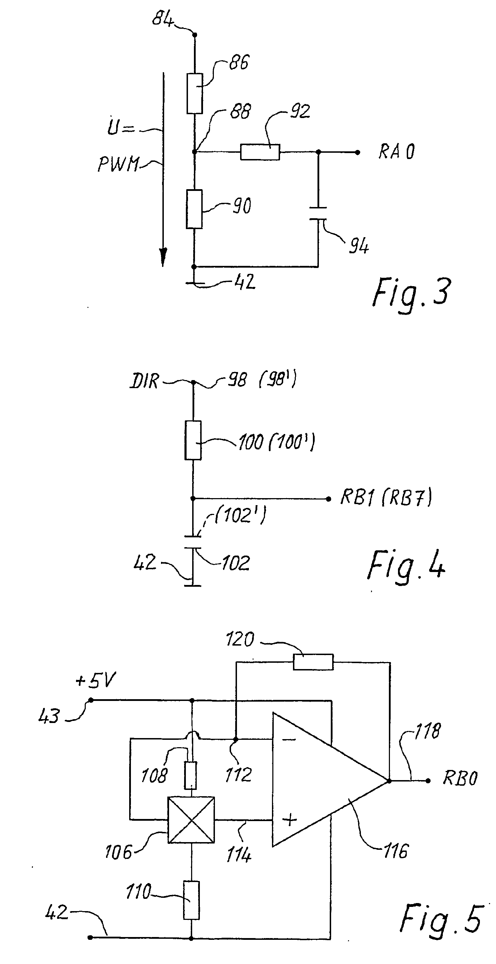

**Fig. 3** zeigt die Erzeugung des Signals für die gewünschte Drehzahl (Solldrehzahl $n_{soll}$). Der $\mu$C 76 hat eine Mehrkanal-8 Bit-A/D-Wandlung, d.h. er setzt ein zugeführtes analoges Signal in ein digitales Signal mit 8 Bit um. Von dieser A/D-Wandlung wird am Eingang RAO ein Kanal benutzt. Da es in der Industrie üblich ist, derartige Signale entweder als Gleichspannung mit einem Spannungsbereich von 0 ... 10 V vorzugeben, oder als Frequenzsignal mit einem Tastverhältnis von 0 bis 100 %, wird eine Schaltung gemäß Fig. 3 verwendet. Diese hat einen Anschluss 84 für das von außen zugeführte Signal, also entweder eine Gleichspannung U= oder ein PWM-Signal PWM. Vom Anschluss 84 führt ein Widerstand 86 zu einem Knotenpunkt 88, und von dort ein Widerstand 90 zur Minusleitung 42.

Vom Knotenpunkt 88 führt ein Widerstand 92 zum Anschluss RAO des $\mu$C 76, und von RAO zur Minusleitung 42 ein Kondensator 94. Auf diese Weise wird die Spannung bzw. das PWM-Signal am Eingang 84 in einen Spannungsbereich umgesetzt, der am Eingang RAO digitalisiert werden kann.

**Bevorzugte Werte für Fig. 3**

| Widerstände 86, 90 | ...2,7 kOhm |
|---|---|
| Widerstand 92 | ...680 kOhm |
| Kondensator 94 | ...68 nF |

**Fig. 4** zeigt die Erzeugung eines Signals für die gewünschte Drehrichtung, das dem Eingang RB1 des $\mu$C 76 zugeführt wird. Von einem Eingang 98 für einen von außen zugeführten Logikpegel (Steuersignal) DIR (entweder gilt DIR=0 oder DIR=1) führt ein Widerstand 100 zum Eingang RB1, und von dort ein Kondensator 102 zur Minusleitung 42.

**Bevorzugte Werte:**

| Widerstand 100 | ...2,7 kOhm |
|---|---|
| Kondensator 102 | ...10 nF |

Falls die gewünschte Drehzahl einem Eingang 98' in Form einer Frequenz zugeführt werden soll, wird ebenfalls die Schaltung gemäß Fig. 4 verwendet, aber mit anderen Werten, weshalb die entsprechenden Bauelemente mit Bezugsziffern in Klammern bezeichnet sind. Der Widerstand 100' hat hier ebenfalls bevorzugt 2,7 kOhm, der Kondensator 102' 4,7 nF, und das Signal am Ausgang wird dem Eingang RB7 des µC 76 zugeführt.

**Fig. 5** zeigt eine Schaltung zur Erfassung eines Frequenzwertes, der der Drehzahl des Rotors 38 proportional ist.

Hierzu ist im Bereich des Rotors 38 ein Hallgenerator 106 vorgesehen, wie in Fig. 1 symbolisch angedeutet. Seine Stromeingänge sind über einen Widerstand 108 mit dem Anschluss 43 (+ 5 V) und über einen Widerstand 110 mit der Minusleitung 42 verbunden. Seine Ausgangssignale werden dem Minuseingang 112 und dem Pluseingang 114 eines OPV 116 zugeführt, dessen Ausgang 118 über einen Rückkopplungswiderstand 120 mit dem Minuseingang 112 und direkt mit dem Eingang RB0 des µC 76 verbunden ist. Der Eingang RB0 hat eine Interrupt-On-Change-Funktion, d.h. wenn das Signal am Hallgenerator 106 rasch steigt oder rasch fällt, wird im µC 76 ein sogenannter Hall-Interrupt erzeugt. Dieser dient zur Steuerung der Kommutierung des Motors 30 und zur Erfassung von dessen Drehzahl.

**Bevorzugte Werte in Fig. 5:**

| Widerstände 108, 110 | ...470 Ohm |
|---|---|
| Widerstand 120 | ...100 kOhm |
| Hallgenerator 106 | ...HW301A FU |
| OPV 116 | ...LM29030 |

**Fig. 6** zeigt eine bevorzugte Schaltung gemäß den Fig. 1 bis 5 in der Zusammenschau. Für gleiche oder gleich wirkende Teile werden in allen Figuren dieselben Bezugszeichen verwendet, und diese Teile werden gewöhnlich nur einmal beschrieben.

Die Plusleitung 40 ist über eine Diode 128 mit einem Anschluss 130 verbunden, der z.B. an eine Batterie 132 angeschlossen sein kann. Die Diode 128 verhindert eine Zerstörung der Schaltung, wenn die Batterie 132 mit falscher Polarität angeschlossen wird. Ein Kondensator 134 (z.B. 10 µF) ist zwischen den Leitungen 40 und 42 angeschlossen und dient dazu, Energie aufzunehmen, die über die Freilaufdioden 44 bis 50 an die Leitung 40 zurückgespeist wird.

Vom Anschluss 130 führt ein Widerstand 134 über einen Knotenpunkt zu einer Zenerdiode 138 (5,6 V) und von dieser zur Minusleitung 43, an die auch der Emitter eines npn-Transistors 140 angeschlossen ist, dessen Basis mit dem Knotenpunkt 136 und dessen Kollektor über einen Widerstand 142 mit dem Anschluss 130 verbunden ist. Der Transistor 140 arbeitet als Emitterfolger und liefert an seinem Emitter und dadurch an der Leitung 43 eine geregelte Spannung von z.B. + 5 V, die über einen Kondensator 144 (10 nF) gesiebt wird.

Der Anschluss Vss des µC 76 ist mit der Minusleitung 42 verbunden, der Anschluss VDO mit der Leitung 43. An die Anschlüsse OSC1 und OSC2 ist ein Quarzoszillator 146 (1 MHz) angeschlossen, zu dem eine Serienschaltung von zwei Kondensatoren 148, 150 parallelgeschaltet ist, deren Verbindungspunkt mit der Leitung 42 verbunden ist. Die nicht verwendeten Anschlüsse RA1, RA2, RA3, RA4, MLCR/, RB4, RB5, RB6 sind jeweils über einen Widerstand R (z.B. 10 kOhm) mit der Leitung 43 verbunden und liegen dadurch auf einem definierten Potenzial.

Der Rest der Schaltung gemäß Fig. 6 wurde bereits bei den Fig. 1 bis 5 ausführlich beschrieben.

**Erläuterung des Vierquadrantenbetriebs (4-Q-Betriebs)**

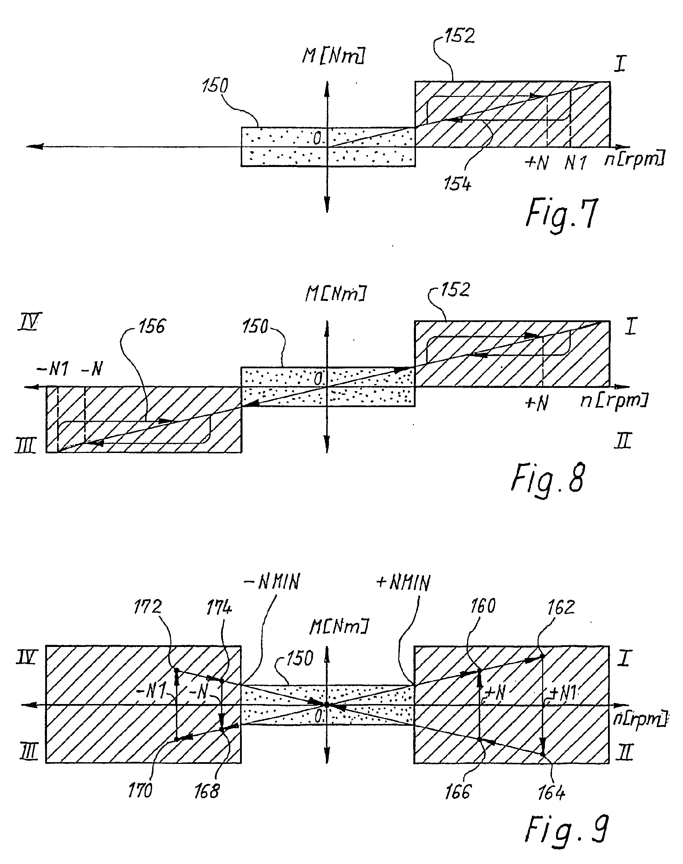

In den Fig. 7 bis 9 sind die vier Quadranten mit I bis IV bezeichnet.

**Fig. 7** zeigt ein Diagramm für einen 1-Q-Betrieb, z.B. Betrieb des Motors 30 in seiner Vorzugsrichtung. Auf der waagerechten Achse ist die Drehzahl n aufgetragen, auf der senkrechten Achse das antreibende oder bremsende Drehmoment M.

In einem Bereich 150 um den Nullpunkt herum ist bei dieser Motorbauart kein geregelter Betrieb möglich, sondern erst in einem Bereich 152. Im Bereich 152 wird der Motor 30 z.B. auf eine geregelte Drehzahl +N beschleunigt.

Wenn die Drehzahl +N überschritten wird, so dass ein höherer Drehzahlwert +N1 erreicht wird, erhält der Motor 30 zeitweilig keinen oder nur wenig Strom, so dass seine Drehzahl längs einer Kurve 154 infolge Reibung etc. wieder sinkt. Eine aktive Bremsung findet nicht statt, sondern das positive Drehmoment M wird reduziert, ggf. auf Null.

**Fig. 8** zeigt einen 2-Q-Betrieb, also einen Zweiquadrantenbetrieb, bei dem der Motor 30 auch rückwärts laufen kann. Beim Rückwärtslauf wird er mit einem negativen Drehmoment angetrieben und erreicht so die geregelte Drehzahl -N. Steigt durch äußere Einflüsse diese Drehzahl noch höher auf -N1, so wird das negative Drehmoment seinem Betrag nach reduziert (Kurve 156), ggf. auf 0, so dass die Drehzahl durch Reibung etc. wieder auf den Wert -N sinkt.

**Fig. 9** zeigt die Darstellung eines 4-Q-Betriebs, also eines Vierquadrantenreglers. Es sei unterstellt, dass bei Antrieb in Vorwärtsrichtung auf eine Drehzahl +N geregelt wird, entsprechend dem Punkt 160.

Wenn durch äußere Einflüsse die Drehzahl auf einen Wert +N1 erhöht wird, entsprechend einem Punkt 162, der über der gewünschten Drehzahl liegt, wird vom Regler ein negatives (bremsendes) Drehmoment erzeugt, d.h. der Motor geht zu einem Punkt 164, und dort wird durch den Regler ein Bremsmoment erzeugt, so dass die Drehzahl zu einem Punkt 166 geht, der der geregelten Drehzahl +N entspricht. Dort wird wieder auf ein positives Drehmoment umgeschaltet, so dass der Regler wieder zum Punkt 160 geht, entsprechend der gewünschten Drehzahl +N.

Das bremsende Drehmoment wird bei dieser Motorbauart in sehr einfacher Weise dadurch erzeugt, dass der Motor 30 mit einer um 180° el. verschobenen Kommutierung betrieben wird, d.h. mit derselben Kommutierung wie bei Rückwärtslauf. Dies wird nachfolgend bei Fig. 19 beschrieben.

Wenn der Motor 30 mit der Drehzahl -N rückwärts läuft, arbeitet er am Punkt 168. Wird er dort durch äußere Einflüsse angetrieben, so kann seine Drehzahl auf -N1 ansteigen, also bis zum Punkt 170. Dort schaltet der 4-Q-Regler auf ein positives Drehmoment um, also zum Punkt 172, und durch das positive Drehmoment sinkt die Drehzahl wieder auf -N, also zum Punkt 174, wo das Drehmoment wieder auf Antrieb in Rückwärtsrichtung umgeschaltet wird, so dass man wieder am Ausgangspunkt 168 ist, also der gewünschten Drehzahl.

In der gleichen Weise ist auch ein Übergang von +N (Punkt 160) zu -N (Punkt 168) möglich. Dazu wird durch einen Befehl DIR=1 (am Eingang 98 der Fig. 6) bei der Drehzahl +N ein negatives Drehmoment erzeugt, d.h. der Motor geht vom Punkt 160 zum Punkt 166, von dort zur Drehzahl 0, und dann - mit dem gleichen, nunmehr antreibend wirkenden Drehmoment, das ständig eingeschaltet bleibt - zur Drehzahl $-N_{MIN}$ am linken Ende des Fensters 150. Dort wird auf Drehzahlregelung umgeschaltet, und die Drehzahl wird auf den Wert -N geregelt, entsprechend dem Punkt 168. Der Motor läuft dann in Rückwärtsrichtung mit der Drehzahl -N.

Will man vom Punkt 168 zum Punkt 160 gelangen, wobei also die Drehzahl durch den Wert Null geht und der Motor seine Drehrichtung umkehrt, so geht der Verlauf vom Punkt 168 zum Punkt 174 (positives Drehmoment wird erzeugt), zur Drehzahl 0, und dann - mit demselben positiven Drehmoment - zur Drehzahl $+N_{MIN}$ und anschließend - mit Drehzahlregelung - zum Punkt 160 mit der Drehzahl +N.

Der Vorteil beim 4-Q-Betrieb ist, dass Drehzahländerungen sehr schnell ablaufen, der Antrieb also sehr dynamisch ist, und dass z.B. auch der Antrieb eines Rollladens möglich ist, weil beim Schließen des Rollladens, wo dieser nach unten zieht und dadurch den Motor 30 antreibt, letzterer automatisch in den Bremsbetrieb übergeht und dadurch die eingestellte Drehzahl beibehält. Bei dieser Motorbauart ist zudem die Umschaltung des Drehmoments von positiv nach negativ oder umgekehrt außerordentlich einfach und problemlos.

## Software

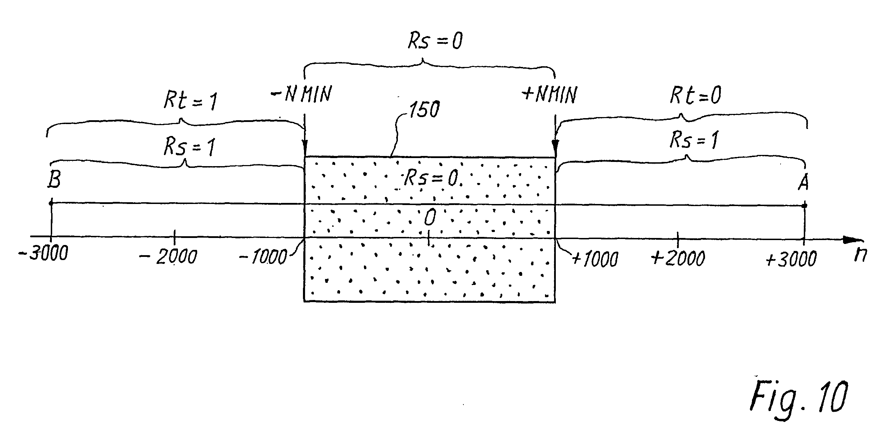

Hierzu wird auf **Fig. 10** Bezug genommen. Diese zeigt als Beispiel einen Drehzahlbereich von -3000 bis +3000. In diesem Bereich befindet sich das Fenster 150, das von einer unteren Mindestdrehzahl $-N_{MIN}$ bis zu einer oberen Mindestdrehzahl $+N_{MIN}$ geht, z.B., wie dargestellt, von -1000 bis +1000.

In diesem Fenster 150 ist, wie eingangs beschrieben, bei dieser Art von Motor eine Drehzahlregelung nicht möglich. Wenn der Benutzer z.B. eine Drehzahl von +800 U/min einstellt, wird das deshalb vom µC 76 so interpretiert, als würde die Drehzahl 0 eingestellt, d.h. der Motor 30 läuft nicht an, oder er wird, wenn er läuft, abgeschaltet.

Solange sich die aktuelle Drehzahl n innerhalb des Fensters 150 befindet, wird ein Flag Rs=0 gesetzt, was vom Rechner als "Motor steht" interpretiert wird, obwohl die Drehzahl z.B. zwischen -999 und +999 U/min liegen kann.

Bei Verlassen des Fensters 150 wird dieses Flag umgestellt auf Rs = 1, also "Motor läuft", und in diesem Bereich, wo Rs=1 ist, wird die Drehzahl durch einen Drehzahlregler geregelt.

Ferner wird ein Richtungsflag Rt verwendet. Erst wenn beim Anlauf oder einer Drehrichtungsänderung die Drehzahl das Fenster 150 verlässt, wird das Richtungsflag Rt umgeschaltet auf den Wert der augenblicklich vom Benutzer befohlenen Richtung DIR, der am Eingang 98 (Fig. 6) zugeführt wird. (DIR kann entweder den Wert 0 oder den Wert 1 haben).

Wenn z.B. in Fig. 10 der Motor 30 am Punkt A arbeitet, also bei eine Drehzahl von 3000, wobei Rt=0 ist, und es wird der Befehl DIR=1 gegeben, also der Befehl, dass der Motor 30 reversieren und zum Punkt B gehen soll, also auf den Drehzahlwert -3000, so wird ab dem Punkt A der Motor 30 mit maximalem Bremsstrom bestromt (also nicht mehr geregelt) und unterschreitet dadurch rasch +NMIN, wo Rs von 1 auf 0 umgeschaltet wird. Die Information Rs=0 instruiert den Rechner, weiterhin mit maximalem Bremsstrom zu arbeiten, so dass zunächst die Drehzahl 0 erreicht wird, wo der Bremsstrom - durch die geänderte Drehrichtung - automatisch zum Antriebsstrom wird, so dass die Drehzahl in negativer Richtung ansteigt. Während dieser ganzen Zeit bleibt die "alte" Drehrichtung Rt = 0 gespeichert. Dabei wird die Drehzahl 0 problemlos und kontinuierlich durchlaufen.

Ab Erreichen der Drehzahl $-N_{MIN}$ ergibt sich eine Änderung von Rs = 0 zu Rs = 1, d.h. ab hier setzt die Drehzahlregelung wieder ein und der neue, am Eingang 98 vorgegebene Richtungswert DIR=1 wird als Rt=1 gespeichert, so dass der Motor ab $-N_{MIN}$ geregelt bis zur Drehzahl -3000 hochläuft. Das Richtungsflag Rt wird also nicht beim Durchlaufen der Drehzahl 0 geändert, sondern erst beim Verlassen des Fensters 150 der Fig. 10.

In umgekehrter Richtung (von B nach A) ist der Ablauf spiegelbildlich genau derselbe, d.h. die Drehzahl 0 wird problemlos durchlaufen, weil bei diesem Typ von Motor gilt: Bremsen in einer Richtung = Antrieb in der Gegenrichtung. Diese Eigenschaft wird bei der vorliegenden Erfindung in vorteilhafter Weise ausgenutzt.

Innerhalb des Fensters 150 wird nicht geregelt, sondern der Motor 30 läuft dort ungeregelt mit maximalem Stellwert, also maximalem Strom, wobei abhängig vom Motortyp der Motorstrom ggf. durch eine Strombegrenzung begrenzt werden muss, wie bei Fig. 1 beschrieben. In bevorzugter Weise wird bereits im Bereich des Fensters 150 der Stellwert BW (Fig. 18, 19) für die Regelung fortlaufend berechnet, damit er sofort zur Verfügung steht, wenn von Rs=0 auf Rs=1 umgeschaltet wird.

Bei den im Zusammenhang mit Fig. 1 und 6 beschriebenen Operationsverstärkern 52 und 54 vom Typ L2720 ist eine interne Strombegrenzung vorgesehen. Alternativ kann, besonders bei höheren Leistungen, auch eine externe Strombegrenzung vorgesehen werden.

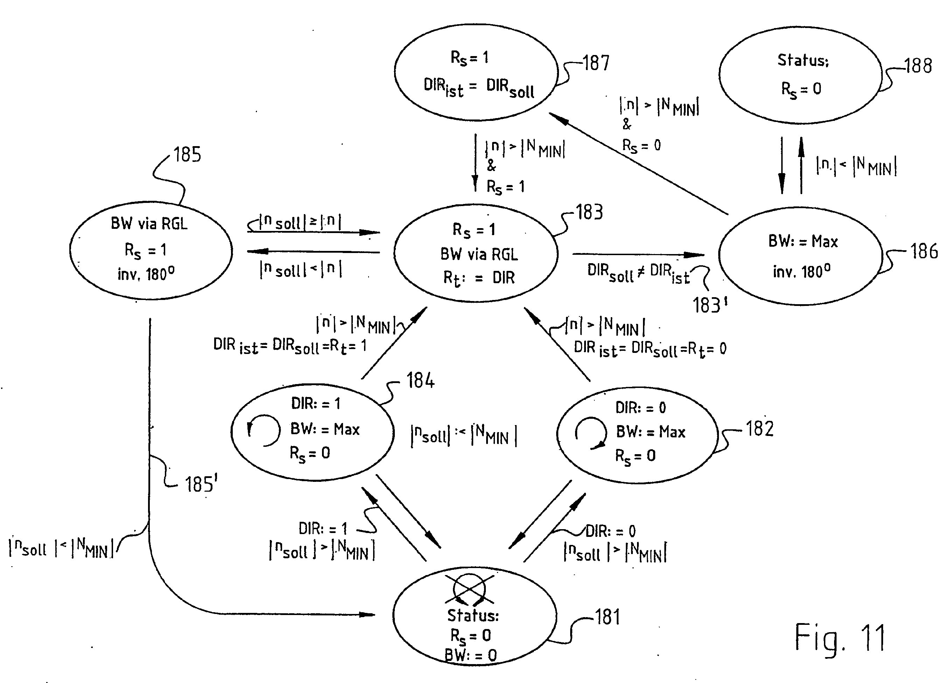

**Fig. 11** zeigt ein Zustandsdiagramm für die verschiedenen Abläufe, die im 4-Q-Betrieb vorkommen.

### Der "normale" Anlauf in Vorwärtsrichtung

Wenn im Zustand 181 (Stillstand des Motors 30) durch ein Signal DIR = 0 am Eingang 98 (Fig. 4 und 6) die Drehrichtung rechts, also Vorzugsrichtung, vorgegeben wird und der Drehzahl-Sollwert $n_{soll}$ am Eingang 86 oder 98' größer als die Mindestdrehzahl $+N_{MIN}$ ist, geht der Regler in den Zustand 182, d.h. der Motor 30 läuft mit maximalem Stellwert BW, also maximalem Strom, in Vorzugsrichtung (DIR = 0) an. Der Start in Vorzugsrichtung ist bei diesen Motoren problemlos. Dabei wird das Flag Rs auf Rs = 0 eingestellt, da die tatsächliche Drehzahl n kleiner als $N_{MIN}$ ist.

Wenn die tatsächliche Drehzahl n den Wert $+N_{MIN}$ überschritten hat, geht der Motor 30 vom Zustand 182 in den Zustand 183, d.h. sein Betriebsbereich ist erreicht, und die Drehzahl n wird jetzt auf den vorgegebenen Wert $n_{soll}$ durch den Regler der Fig. 19 geregelt, was in Fig. 11 mit "BW via RGL" symbolisch angegeben ist. Der Motorstatus Rs wird umgeschaltet auf Rs = 1, da die tatsächliche Drehzahl n größer als $N_{MIN}$ geworden ist, und der Regler regelt die Drehzahl durch Veränderung der Blocklänge BW (Fig. 18, 19) auf den gewünschten Wert. Soll der Motor 30 z.B. schneller laufen, so wird der Stellwert BW innerhalb der zulässigen Grenzen vergrößert, d.h. der Motor 30 arbeitet dann mit einem höheren Stellwert BW und folglich einem höheren Strom.

### Start in Reversrichtung

Diese Art von Motor ist eigentlich nur für den Start in einer Vorzugsrichtung DIR = 0 ausgelegt. Deshalb ist für einen zuverlässigen Start in Reversrichtung (DIR = 1) "elektronische Hilfe" nötig. Hierbei läuft der Motor 30 zunächst aus dem Status 181 in Vorzugsrichtung an, also entgegen der befohlenen Drehrichtung $DIR_{soll}$.

Wenn im Zustand 181 die Drehrichtung DIR = 1, also links (Rückwärtsdrehung; Drehung in Reversrichtung) vorgegeben wird, und der vorgegebene Sollwert $n_{soll}$ negativer als die (negative) Mindestdrehzahl $-N_{MIN}$ ist, beschleunigt der Motor 30 zunächst in Vorzugsrichtung, also mit DIR = 0, misst dabei die Zeit T_HALL zwischen zwei Hallwechseln, also zwischen zwei Hall-Interrupts, bis T_HALL kleiner als ein vorgegebener Wert $T_G$ geworden ist, und bestromt anschließend nochmals während einer Zeit ($T_G$ - EW), damit der Motor 30 magnetische Energie für den Reversstart speichern kann, reversiert dann aus diesem Zustand, und beschleunigt bis $-N_{MIN}$ mit maximalem Stellwert BW = MAX in Rückwärtsrichtung. Dies ist der Zustand 184. Der Wert EW ist dabei eine empirisch ermittelte Konstante für den betreffenden Motor 30 in seiner konkreten Applikation, also z.B. eingebaut in einem Lüfter.

Nach Erreichen von $-N_{MIN}$ wird Rs = 1 gesetzt, und der Motor geht in den Zustand 183 über. Dort wird die Drehzahl durch den Drehzahlregler (Fig. 19) auf den gewünschten Wert geregelt ("BW via RGL"), und die eingestellte Sollrichtung (DIR = 1) wird jetzt als Flag Rt = 1 gespeichert.

Der μC 76 hat bei diesem Beispiel für die Erfassung der Drehzahl einen Zähler, der nur bis 64.000 μs zählen kann, also bis 64 ms. Dies bedeutet, dass man die Drehzahl n erst messen kann, wenn die Zeit zwischen zwei Hall-Interrupts kleiner als $T_G$ = 64 ms geworden ist. Diese Zeit entspricht einer Rotordrehung von 180° el. Wenn der Motor 30 bei der Messung noch zu langsam ist, tritt ein Überlauf auf, und diese Messung kann deshalb noch nicht verwendet werden. Deshalb wird der Motor 30 so lange in Vorzugsrichtung (DIR = 0) angetrieben, bis die Zeit zwischen zwei Hall-Interrupts einen Wert von kleiner als $T_G$ = 64 ms erreicht hat. Wenn der Motor 30 ein kleines $GD^2$ hat, erreicht er diese Drehzahl n schon zwischen den beiden ersten Hall-Interrupts, aber bei einem Lüfter mit großem Lüfterrad dauert es länger, bis diese Drehzahl erreicht ist.

Wenn die Drehzahl n so hoch geworden ist, dass zwischen zwei Hall-Interrupts die Zeit T_HALL für 180° el. z.B. 63,8 ms beträgt, was einer Drehzahl von 235 U/min entspricht, nämlich 60/(4 x 0,0638), so zieht man von dieser so ermittelten Zeit T_Hall den empirisch ermittelten Wert EW ab, führt also die Operation

$$(T\_HALL - EW) \qquad\qquad ...(1)$$

durch, und ab dem nächsten Hall-Interrupt misst man diese Zeit (T_HALL - EW) und schaltet nach ihrem Ablauf um auf Kommutierung in Gegenrichtung, d.h. erst ab diesem Zeitpunkt wird der Rotor 38 in der gewünschten Richtung angetrieben. In diesem Augenblick entspricht der Wert T_HALL praktisch dem Wert $T_G$.

Das ist in **Fig. 12** für einen vierpoligen Motor 38 dargestellt. Fig. 12 zeigt zwei Hall-Interrupts 190, 192. Zwischen diesen wird erstmals eine Zeit T_HALL gemessen, die kleiner ist als $T_G$ = 64 ms. Von dieser Zeit wird der Wert EW subtrahiert, z.B. 5 ms. Ab dem Hall-Interrupt 192 wird nun die berechnete Zeit (T_HALL - EW) gemessen, und zum Zeitpunkt 194 wird von DIR = 0 auf Bestromung in der gewünschten Sollrichtung, also mit DIR = 1, umgeschaltet. Dies bedeutet den Antrieb in Reversrichtung.

Der Motor 38 läuft bei diesem Vorgang durch seine gespeicherte Energie zunächst noch um einen kleinen Drehwinkel weiter in Vorzugsrichtung, und EW ist empirisch so ermittelt, dass der Motor bis zu einer Drehstellung weiterläuft, wo er in seinem magnetischen Kreis genügend magnetische Energie gespeichert hat, um den Start in Reversrichtung zu unterstützen und zu ermöglichen. Man kann sagen, dass der Rotor 38 bei seinem anfänglichen Start in Vorzugsrichtung, also der "falschen" Drehrichtung, "Schwung holt", also magnetische Energie für den Start in Reversrichtung speichert, und durch diesen "Schwung" läuft der Motor dann von dieser empirisch ermittelten Startstelle aus problemlos in Reversrichtung an.

Hierzu wird noch auf das Diagramm der Fig. 13 verwiesen, wo der Verlauf des Reluktanzmoments $M_R$ schematisiert dargestellt ist. An der Stelle 196 hat der Rotor 38 eine durch das Reluktanzmoment $M_R$ definierte Ruhelage, weil dort $M_R$ = 0 ist, und wenn er in Vorzugsrichtung (DIR = 0) startet, steigt das bremsende Reluktanzmoment 198 nur relativ langsam an, so dass ein Anlauf problemlos möglich ist. Startet der Rotor 38 jedoch in Reversrichtung (DIR = 1), so tritt direkt nach dem bei 196 erfolgenden Start ein steil ansteigendes bremsendes Reluktanzmoment 200 auf, das dort den Anlauf verhindern kann. Deshalb wird in diesem Fall der Rotor 38 durch Bestromung in der Richtung DIR = 0 bis etwa zu einer Stelle 202 (Fig. 13) verdreht, aus der heraus er problemlos in der Richtung DIR = 1 starten kann.

**Übergang aus dem Zustand 183 in den Bremszustand**

Es gibt hier verschiedene Möglichkeiten:

    a) Die Drehzahl n soll reduziert werden.
    b) Der Motor 30 soll stillgesetzt werden.
    c) Der Motor soll reversiert werden.

**a) Die Drehzahl soll reduziert werden.**

Wird lediglich die Drehzahl n reduziert, ohne dass sich die Drehrichtung ändert, so ist der Sollwert $n_{soll}$ kleiner als der Istwert n, und der Regler geht in den Zustand 185, wo mit dem entsprechenden (geregelten) Strom der Motor um 180° el. versetzt bestromt wird, was mit "inv 180°" symbolisch angegeben ist. Die Reihenfolge der Stromimpulse i, i' wird hierbei invertiert, also umgekehrt. Das Flag Rs behält den Wert 1.

Ist der Sollwert $n_{soll}$ wieder größer oder gleich dem Istwert n, so geht der Regler aus 185 zurück in den Zustand 183, d.h. die um 180° el.versetzte Bestromung wird wieder auf eine normale Bestromung umgeschaltet. Die neue Drehzahl wird also durch ein "dosiertes Bremsen" mittels inverser Bestromung erreicht, was sehr schnelle Regelvorgänge ermöglicht.

**b) Der Motor 30 soll stillgesetzt werden.**

Ist der Sollwert $n_{soll}$ kleiner als $|N_{MIN}|$ (einschließlich des Sollwerts 0), so wird ebenfalls gebremst, indem die Bestromung um 180° el. verschoben wird, und der Regler geht - über den Zustand 185 und den Pfad 185' - in den Zustand 181, also Rs=0, BW=0 und Stillstand, weil unterhalb von $|N_{MIN}|$ aus physikalischen Gründen eine Drehzahlregelung nicht möglich ist und deshalb ein solcher Sollwert $n_{soll}$ als gewünschte Drehzahl 0 interpretiert wird. Der Stellwert BW wird dabei auf 0 gestellt, d.h. der Strom zum Motor 30 wird abgeschaltet.

### c) Der Motor soll reversiert werden.

Soll - aus dem Zustand 183 heraus - der Motor 30 reversiert werden, so gilt gemäß 183'
Sollrichtung ≠ Istrichtung,
und der Regler geht in den Zustand 186. Dort wird der Motor 30 mit maximalem Stellwert BW in Bremsrichtung bestromt, also mit "inv. 180°", unterschreitet dabei $|N_{MIN}|$, und gelangt in den Zustand 188, wo Rs auf 0 umgeschaltet wird, solange die Drehzahl n im Fenster 150 (Fig. 10), also zwischen $+N_{MIN}$ und $-N_{MIN}$, liegt. Der Status 188 (Rs = 0) besagt also nicht, dass der Motor 30 tatsächlich steht, sondern nur, dass seine tatsächliche Drehzahl n unterhalb der vorgegebenen Werte liegt. Dies zeigt Fig. 10. Innerhalb des gesamten Fensters 150 ist Rs = 0, und das gibt dem µC 76 die Information, dort mit maximalem Stellwert, also maximalem Strom, zu fahren, entsprechend dem Zustand 186. (Die Änderung in Rs = 0 im Zustand 188 ist eine Zustandsänderung und wird deshalb separat dargestellt.)

Beim Reversieren der Drehrichtung geht der Motor 30 in Fig. 10 z.B. von A nach B, also vom Zustand 183 zum Zustand 186. Obwohl hierbei die vorgegebene Soll-Drehrichtung $DIR_{soll}$ den Wert 1 hat, bleibt der bisherige Wert Rt = 0 für die Drehrichtung vorerst gespeichert, und weil als neue Drehrichtung DIR = 1 vorgegeben ist und die neue Drehzahl außerhalb des Fensters 150 (Fig. 10) liegt, erhält der µC 76 die Information, dass der Motor 30 mit vollem Stellwert in umgekehrter Drehrichtung bestromt werden muss (Zustand 186). Im Bereich der bisherigen Drehrichtung bedeutet das einen Bremsvorgang mit hohem Strom, und diese Art der Bestromung mit hohem Strom wird zwischen A und B unverändert fortgesetzt bis zur Drehzahl $-N_{MIN}$, also bis zum Verlassen des Fensters 150, wobei aber ab der Drehzahl 0 die vom Rotor 38 in der Wicklung 32 induzierte Spannung die Amplitude der Stromimpulse i bzw. i' reduziert. Hierbei wird die Drehzahl 0 problemlos kontinuierlich durchlaufen.

Ab $-N_{MIN}$ geht der µC 76 zum Zustand 187, wo sich Rs von 0 zu 1 ändert, d.h. ab dort setzt die Drehzahlregelung (Fig. 19) ein, und das Flag Rt = 1 für den neuen Richtungswert DIR = 1 (am Eingang 98 der Fig. 6) wird jetzt gespeichert (Zustand 187), so dass der Motor 30 ab $-N_{MIN}$ geregelt bis zur gewünschten Drehzahl $n_{soll}$ hochläuft, entsprechend dem Zustand 183 der Fig. 11.

In umgekehrter Richtung, also in Fig. 10 von B nach A, läuft der Vorgang spiegelbildlich genauso ab, d.h. die Drehzahl 0 wird problemlos durchlaufen, weil bei diesem Typ von Motor gilt:
Bremsen in einer Richtung = Antrieb in Gegenrichtung.

Innerhalb des Fensters 150 um die Drehzahl 0 herum wird also nicht geregelt, sondern der Motor 30 läuft dort ungeregelt mit maximalem Stellwert, weil in diesem Bereich eine Regelung nicht möglich ist, aber trotzdem wird auch dort der Stellwert BW für die Drehzahlregelung bevorzugt fortlaufend berechnet, damit er sofort zur Verfügung steht, wenn Rs von 0 auf 1 umgeschaltet wird und die Drehzahlregelung einsetzen muss.

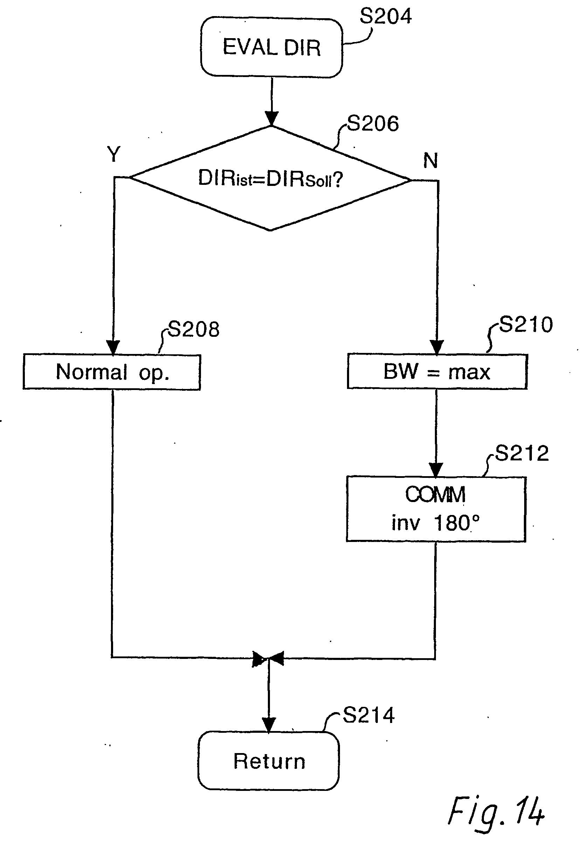

**Fig. 14** zeigt das Flussdiagramm einer Routine S204 für den Vergleich der gewünschten Richtung $DIR_{soll}$ mit der tatsächlichen Richtung DIRist, wie er in Fig. 11 an der Stelle 183' stattfindet.

Im Schritt S206 wird geprüft, ob DIRist = $DIR_{soll}$ ist. Falls ja, geht das Programm weiter zu S208 (Normalbetrieb), d.h. in Fig. 11 bleibt der Zustand 183 unverändert.

Falls in S206 die Antwort NEIN lautet, wird in S210 der Strom auf einen Maximalwert eingestellt, und in S212 wird auf eine um 180° el. phasenverschobene Kommutierung umgestellt. Dies entspricht in Fig. 11 dem Zustand 186.

Danach geht die Routine S204 zum Schritt S214 "Return".

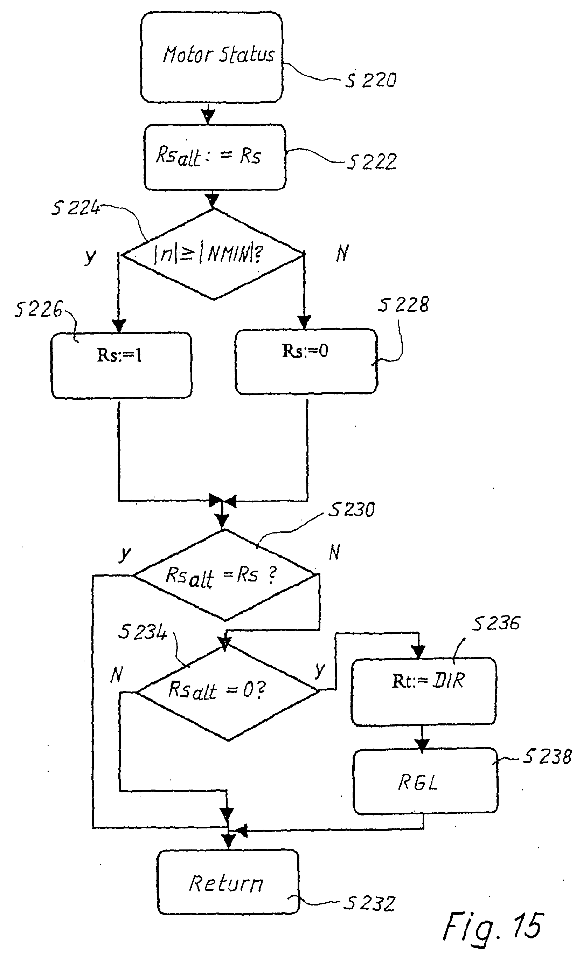

**Fig. 15** zeigt eine Routine S220 mit der Bezeichnung "Motorstatus". In S222 wird der augenblickliche Wert von Rs im Register Rsalt gespeichert. Anschließend wird in S224 geprüft, ob der Betrag |n| der augenblicklichen Drehzahl größer ist als der Betrag $|N_{MIN}|$ der Mindestdrehzahl, d.h. ob die Drehzahl n außerhalb des Fensters 150 liegt. Falls JA, wird in S226 das Flag Rs auf 1 gesetzt, was bedeutet, dass der Motor 30 mit einer $|n| > |N_{MIN}|$ läuft und eine Regelung der Drehzahl stattfinden muss. Falls NEIN, wird in S228 Rs auf 0 gesetzt, was bedeutet, dass sich die Drehzahl innerhalb des Fensters 150 (Fig. 10) befindet, weshalb eine Drehzahlregelung nicht möglich ist.

Anschließend wird im Schritt S230 geprüft, ob Rs nach wie vor den Wert gemäß S222 hat, oder sich geändert hat. Letzteres bedeutet, dass die Schwelle der Drehzahl, also $|N_{MIN}|$, in der einen oder anderen Richtung überschritten wurde, weshalb dann anschließend geprüft werden muss, in welcher Richtung diese Schwelle überschritten wurde. Falls in S230 die Antwort JA lautet, geht die Routine zu ihrem Ende, nämlich zu S232, Return. Falls NEIN, hat sich der Wert von Rs seit dem Schritt S222 geändert, und in S234 wird geprüft, ob Rsalt = 0 war. Falls NEIN bedeutet dies, dass Rsalt den Wert 1 hatte und sich zu Rs=0 geändert hat, d.h. dass die aktuelle Drehzahl n jetzt einen Wert innerhalb des Fensters 150 hat, und die Routine S220 wird über S232 verlassen.

Falls in S234 die Antwort JA lautet, bedeutet dies, dass die Drehzahl des Motors 30 gestiegen ist, die Schwelle $|N_{MIN}|$ überschritten hat, und jetzt außerhalb des Fensters 150 (Fig. 10) liegt, weshalb in S236 das Flag Rt jetzt den neuen Soll-Richtungswert DIR annimmt, der vom Benutzer am Eingang 98 vorgegeben wurde, und in S238 auf eine Drehzahlregelung RGL übergegangen wird, so dass der Drehzahlregler eingreift und die Drehzahl auf den vom Benutzer vorgegebenen Wert $n_{soll}$ geregelt wird. Danach wird diese Routine S220 über S232 verlassen.

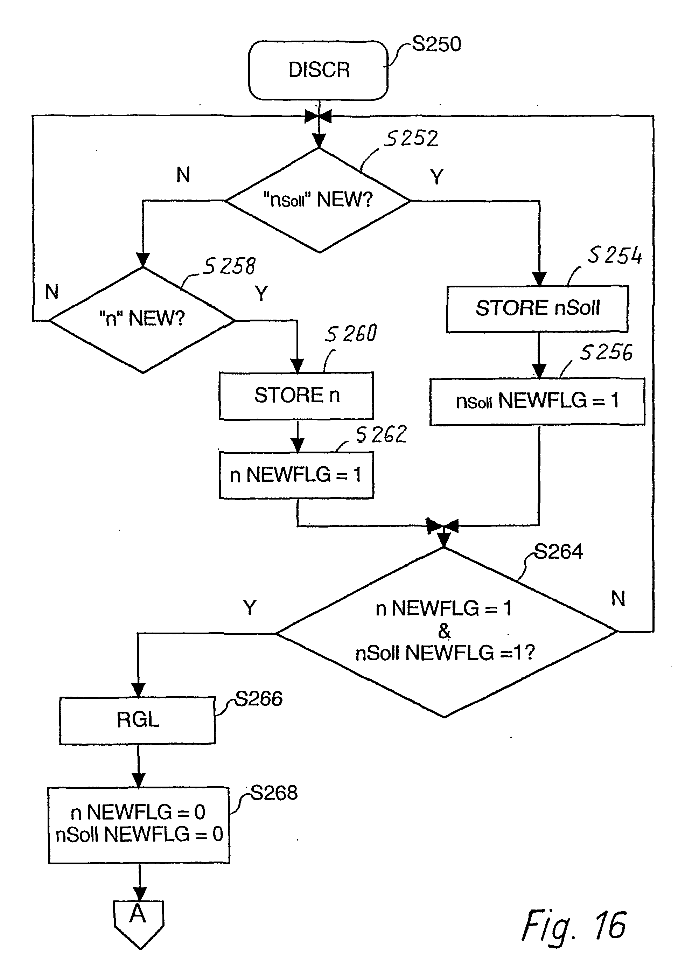

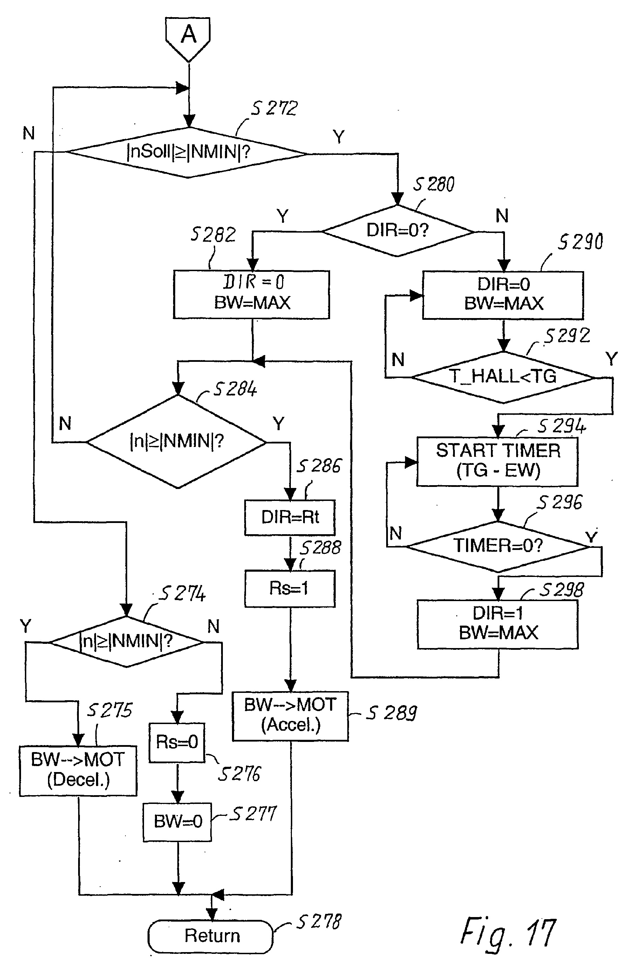

Die **Fig. 16 und 17** zeigen eine Diskriminierungsfunktion S250, welche dazu dient, die Vorgänge beim Anlauf, einer Drehzahländerung oder einer Drehrichtungsänderung des Motors 30 zu steuern.

Im Schritt S252 wird geprüft, ob ein neuer Wert für die Solldrehzahl $n_{soll}$ vorliegt. Dieser Wert wird beim vorliegenden Ausführungsbeispiel als eine Zeit t_s vorgegeben, die der Motor 30 z.B. für eine Drehung von 180° el. benötigen soll. Falls JA, wird in S254 der neue Wert für $n_{soll}$ (also t_s) gespeichert, und in S256 wird ein Flag mit der Bezeichnung "$n_{soll}$ NEWFLG" auf 1 gesetzt, um anzuzeigen, dass ein neuer Wert vorliegt.

Falls in S252 die Antwort NEIN ist, geht das Programm zu S258, wo geprüft wird, ob ein neuer Wert für die tatsächliche Drehzahl n vorliegt. (Beim Ausführungsbeispiel wird als Wert für die tatsächliche Drehzahl die Zeit T_HALL verwendet, die der Rotor 38 für eine Drehung von 180° el. benötigt.) Falls NEIN, geht das Programm zurück zu S252. Falls JA, wird in S260 der neue Wert für n gespeichert, und bei S262 wird ein Flag auf 1 gesetzt, das die Bezeichnung "n NEWFLG" hat, um anzuzeigen, dass ein neuer Wert für n vorliegt. Wie nachfolgend beschrieben, wird dann, wenn zwei neue Werte vorliegen, eine Berechnung mit diesen Werten durchgeführt, und dann werden bei S268 beide Flags auf 0 gesetzt, um anzuzeigen, dass diese Werte "verarbeitet" 11 sind.

Anschließend an S256 und S262 wird in S264 geprüft, ob die beiden Flags aus S256 und S262 den Wert "1" haben. Falls NEIN, geht das Programm zurück zu S252. Falls JA, wird in S266 aus den beiden neuen Werten für n und $n_{soll}$, also aus T_HALL und t_s, ein neuer Stellwert BW berechnet. Dieser Wert gibt die Länge eines Stromblocks bei der sogenannten Blockregelung an, die bei Fig. 18 erläutert wird. (Die Berechnung von BW wird bei Fig. 19 beschrieben.) Danach werden in S268 die beiden Flags "n NEWFLG" und "$n_{soll}$ NEWFLG" wieder auf "0" gesetzt, um anzuzeigen, dass die beiden aktuellen Werte zu einem neuen Stellwert BW verarbeitet worden sind.

Im Schritt S272 (Fig. 17) wird geprüft, ob die Solldrehzahl $n_{soll}$ innerhalb oder außerhalb des Fensters 150 (Fig. 10) liegt, also ob

$$|nsoll| \geq |NMIN|? \quad\quad ...(2)$$

Falls NEIN ("N"), soll das so interpretiert werden, dass die gewünschte Drehzahl gleich Null ist, und es wird anschließend in S274 geprüft, ob die tatsächliche Drehzahl n innerhalb des Fensters 150 liegt, also ob

$$|n| \geq |NMIN|? \quad\quad ...(3)$$

Falls die Drehzahl n außerhalb des Fensters 150 liegt (Antwort: JA), geht die Routine zu S275 und dort wird der Motor 30 mit dem berechneten Stellwert BW abgebremst. Falls die Drehzahl n innerhalb des Fensters 150 liegt, also beim Beispiel im Bereich zwischen -1000 und +1000 U/min, wird in S276 gesetzt Rs=0 und in S277 BW=0, also Motor 30 stromlos, und die Routine geht zu S278 (Return).

Falls in S272 die Antwort Y (JA) ist, also die gewünschte Drehzahl $n_{soll}$ außerhalb des Fensters 150 liegt, wird in S280 geprüft, in welche Richtung der Motor 30 anlaufen soll. Die Vorgabe DIR = 0 am Eingang 98 bedeutet, dass der Motor 30 in Vorzugsrichtung starten soll. DIR = 1 bedeutet Start entgegen der Vorzugsrichtung.

Falls in S280 die Antwort JA lautet, also Start in Vorzugsrichtung, erfolgt in S282 die übliche Kommutierung in Vorzugsrichtung "0" bei maximalem Stellwert BW, also maximalem Strom, um einen raschen Start zu erhalten, d.h. innerhalb des Fensters 150 erfolgt keine Drehzahlregelung.

Anschließend geht die Routine zum Schritt S284, wo geprüft wird, ob die tatsächliche Drehzahl n außerhalb des Fensters 150 liegt. Falls NEIN, geht die Routine zurück zu S272. Falls JA, geht die Routine zu S286, wo jetzt das Flag Rt den aktuellen Wert von DIR erhält, also in diesem Fall Rt = 0, da der Motor 30 in Vorzugsrichtung "0" läuft.

Anschließend wird in S288 Rs=1 gesetzt, um anzuzeigen, dass die aktuelle Drehzahl n einen Wert außerhalb des Fensters 150 erreicht hat, und dass deshalb der Motor 30 jetzt mit Drehzahlregelung betrieben werden muss. Dieses Flag Rs wird im μC76 entsprechend ausgewertet, vgl. Fig. 15, und schaltet die Drehzahlregelung n_CTL ein, so dass in S289 der Motor 30 mit dem berechneten Stellwert BW, also geregelt, beschleunigt wird.

Falls in S280 DIR = 1 ist, bedeutet dies einen Start entgegen der Vorzugsrichtung, wie er bei Fig. 12 bereits erläutert wurde. In diesem Fall geht die Routine zu S290, wo der Motor 30 - entgegen dem Befehl DIR = 1 - in der Vorzugsrichtung "0", also mit DIR = 0, mit maximalem Stellwert BW gestartet wird, ebenso wie in S282.

Anschließend wird in S292 geprüft, ob die Zeit T_HALL (Fig. 12), also die Zeit zwischen zwei aufeinander folgenden Hall-Interrupts, kleiner als eine Zeit $T_G$ geworden ist, die bei diesem Beispiel 64 ms beträgt, wie bereits erläutert. (Die Zeit T_HALL entspricht der Zeit für eine Viertelsumdrehung des vierpoligen Rotors 38. In S292 wird also bei diesem Beispiel - indirekt - abgefragt, ob der Rotor 38 eine Drehzahl von mindestens 234 U/min erreicht hat). Falls die Antwort NEIN lautet, geht die Routine zurück zu S290, und es wird weiter mit maximalem Stellwert BW, also maximalem Strom, in Vorzugsrichtung kommutiert, bis die Bedingung von S292 erfüllt ist.

Die meisten Motoren erreichen schon nach einer Viertelsumdrehung eine Drehzahl von 234 U/min, weil der Start mit maximalem Strom erfolgt. Bei manchen Antrieben kann es aber sein, dass ein größerer Drehwinkel benötigt wird, um einen Wert für T_HALL zu erreichen, der kleiner als $T_G$ ist.

Falls in S292 die Antwort JA lautet, also die Drehzahl den Wert von 234 U/min erreicht oder überschritten hat, wird in S294 in einen TIMER der Wert ($T_G$ - EW) geladen, und dieser TIMER wird gestartet. Anschließend wird in S296 geprüft, ob TIMER = 0 ist. Falls NEIN, also falls die Zeit ($T_G$ - EW) noch nicht abgelaufen ist, geht die Routine zurück zu S294.

Falls in S296 die Antwort JA lautet, geht die Routine zu S298, wo jetzt - entsprechend dem Befehl DIR=1 am Eingang 98 - die Kommutierung auf Kommutierung in Reversrichtung "1 " bei maximalem Stellwert BW umgeschaltet wird, so dass die Drehzahl von den erreichten +234 U/min über die Drehzahl 0 zur gewünschten negativen Drehzahl, z.B. -1205 U/min, hochläuft, wobei die Drehzahl 0, also die Zone des Stillstands, problemlos durchlaufen wird.

Anschließend an S298 geht das Programm zu S284, wo geprüft wird, ob die tatsächliche Drehzahl n bereits außerhalb des Fensters 150 ist. Falls NEIN, geht die Routine zurück zu S272, wie bereits beschrieben, und falls JA, geht sie zu S286, wo jetzt Rt=1 gesetzt wird, d.h. die vom Benutzer am Eingang 98 vorgegebene Drehrichtung DIR=1 wird nach Verlassen des Fensters 150 auch im Flag Rt im μC76 gespeichert, so dass dieses den Wert Rt=1 annimmt, und anschließend wird in S288 Rs=1 gesetzt, um anzuzeigen, dass nun die Drehzahlregelung aktiviert wird, und bei S289 wird der Motor 30 auf Betrieb mit dem in der Routine S266 berechneten Stellwert BW umgeschaltet, also auf Betrieb mit Drehzahlregelung. Bei S278 wird dann die Routine S250 verlassen.

**Fig. 18** dient zur Erläuterung von Vorgängen bei der Kommutierung des Motors 30.

**Fig. 18a** zeigt ein Signal PWM, das kontinuierlich erzeugt wird und z.B. eine Frequenz von 20 kHz hat. Sein Tastverhältnis pwm ist programmgesteuert einstellbar. Es ist darauf hinzuweisen, dass die vorliegende Erfindung auch ohne Verwendung eines solchen Signals PWM ausgeführt werden kann. Mit diesem Tastverhältnis kann die Amplitude der Stromimpulse i, i' (Fig. 1) gesteuert werden, die dem Motor 30 zugeführt werden.

**Fig. 18b** zeigt das Signal HALL. Dieses hat ansteigende Flanken 370 beim Übergang von LOW nach HIGH, und es hat abfallende Flanken 372 beim Übergang von HIGH nach LOW.

Die Zeitpunkte t1, t2 etc., an denen diese Flanken auftreten, werden von einem Ringzähler TIMER1 gemessen und in einer temporären Variablen t_TEMP gespeichert. Wie Fig. 18 zeigt, regieren die ansteigenden Flanken 370 die Einschaltung der Transistoren HSL und LSR, also des Stromes i der Fig. 1. Umgekehrt regieren die abfallenden Flanken 372 die Einschaltung der Transistoren HSR und LSL, also des Stromes i' der Fig. 1.

Die Dauer T_HALL zwischen zwei Flanken ergibt sich als

$$T\_HALL = t2 - t1 \qquad\qquad ...(4)$$

Diese Zeitdauer ist ein Maß für die augenblickliche Drehzahl n des Rotors 38 und entspricht der Zeit, die dieser für eine Drehung von 180° el. benötigt. Selbstverständlich kann diese Zeit auf vielerlei Arten gemessen werden. Bevorzugt misst man, sobald die Drehzahl hoch genug ist, die Zeit für einen größeren Drehwinkel, insbesondere für eine oder auch mehrere volle Umdrehung(en) des Rotors 38, was beim Ausführungsbeispiel einem Drehwinkel von 720° el. (oder einem Vielfachen hiervon) entspricht. - Die Messung über eine volle Umdrehung ist besonders genau, setzt aber voraus, dass eine bestimmte Mindestdrehzahl erreicht ist.

**Fig. 18c** und **Fig. 18d** zeigen stark schematisiert die Signale für die Steuerung der H-Brücke gemäß Fig. 1. Fig. 18c zeigt die Signale HSR, LSL für die Einschaltung des Stromes i'. Fig. 18d zeigt die Signale HSL, LSR für die Einschaltung des Stromes i.

Der Beginn eines der Impulse 444 der Fig. 18c wird berechnet ab der abfallenden Flanke 372 eines zugeordneten Signals HALL, was durch den Pfeil 445 symbolisiert wird, und der Beginn eines der Impulse 446 der Fig. 18d wird berechnet ab der ansteigenden Flanke 370 des zugeordneten Signals HALL, wie durch den Pfeil 447 symbolisiert.Die Flanken 370, 372 des Signals HALL entsprechen vorgegebenen, messbaren Drehstellungen des Rotors 38. Bei der Berechnung von Kommutierungsvorgängen sind dies die einzigen Drehstellungen, die exakt bekannt sind, und deshalb beziehen sich die Berechnungen auf diese "Fixpunkte".

Unter der Voraussetzung, dass die Steuersignale 444, 446 symmetrisch zu den Impulsen des Signals HALL liegen, ergibt sich für den Zeitpunkt t3, an dem ein Signal 446 beginnt, der Wert

$$t3 = t1 + T\_HALL + (T\_HALL - BW)/2 \qquad\qquad ...(5)$$

Dabei bedeutet

BW = Blocklänge der Signale 444, 446. Diese Blocklänge wird durch den Drehzahlregler RGL berechnet, der nachfolgend bei Fig. 19 beschrieben wird, und sie wird deshalb auch - wie üblich - als Stellwert bezeichnet.

Analog ergibt sich für den Zeitpunkt t4, an dem das Steuersignal 444 beginnen soll, der Wert

$$t4 = t2 + T\_HALL + (T\_HALL - BW)/2 \qquad ...(6)$$

Zu beachten ist, dass z.B. der Zeitpunkt t3 nicht ab dem Zeitpunkt t2 (der direkt vorhergehenden Flanke 372 des Signals HALL) berechnet wird, der am dichtesten bei t3 liegt, sondern ab einem früheren Zeitpunkt t1, nämlich ab der vorvorhergehenden Flanke 370. Der Grund ist, dass dann, wenn BW = T_HALL ist, der Zeitpunkt t2 mit dem Zeitpunkt t3 zusammenfallen würde, was nicht geht, da zwischen t2 und t3 Rechenschritte ausgeführt werden müssen.

Sofern eine sogenannte Zündwinkelverschiebung, z.B. um einen festen Wert VZ, verwendet wird, ändern sich die obigen Formeln wie folgt:

$$t3' = t1 + T\_HALL + ((T\_HALL - BW)/2) - VZ \qquad ...(7)$$

$$t4' = t2 + T\_HALL + ((T\_HALL - BW)/2) - VZ \qquad ...(8)$$

In diesem Fall liegen die Zeitpunkte t3' und t4' um die Größe VZ weiter links, wie in Fig. 18d für t3 angedeutet, was eine etwas frühere Einschaltung der Ströme i und i' bedeutet und eine Verbesserung des Wirkungsgrades bewirken kann. Man erkennt auch, dass t3' in diesem Fall zeitlich vor t2 liegt, was nur möglich ist, weil Bezugszeit RefTime für die Berechnung von t3' nicht der Zeitpunkt t2 ist, also die fallende Flanke 372, sondern der Zeitpunkt t1, also die ansteigende Hallflanke 370, wie durch den Pfeil 447 symbolisch dargestellt. VZ ist gewöhnlich eine Konstante, kann aber auch eine drehzahlabhängige Funktion sein oder durch separate, nicht dargestellte Programmteile ständig optimiert werden.

**Fig. 19** zeigt die Routine RGL S266 für die Drehzahlregelung. Diese beruht auf einem Vergleich der Hallzeit T_HALL mit der Sollzeit t_s, welch letztere der gewünschten Drehzahl $n_{soll}$ entspricht und am Eingang 84 in Form eines PWM-Signals oder einer Gleichspannung vorgegeben werden kann. Der Regler gemäß Ausführungsbeispiel arbeitet also nicht direkt mit Drehzahlen, sondern mit Zeiten, die der Rotor 38 für einen bestimmten Drehwinkel benötigt bzw. benötigen soll. Die Hallzeit T_HALL entspricht der Zeit, die der Rotor 38 für eine Umdrehung von 180° el. benötigt. Ist der Rotor 38 vierpolig und rotiert mit 3000 U/min, so gilt

$$T\_HALL = 60/(3000*4) = 0{,}005\ s = 5\ ms \qquad ...(9)$$

Analog beträgt diese Zeit bei 1000 U/min

$$T\_HALL = 60/(1000*4) = 0{,}015\ s = 15\ ms \qquad ...(10)$$

Bei niedrigen Drehzahlen wird also der Istwert T_HALL sehr groß und ist dann wesentlich größer als der Sollwert t_s, der z.B. für 3000 U/min 5 ms beträgt. Aus diesem Grund wird die Regeldifferenz RGL_DIFF gemäß Schritt S654 bevorzugt als Differenz (T_HALL - t_s) gebildet, damit man ein positives Resultat der Differenzbildung erhält.

Bei S656 wird geprüft, ob die Regeldifferenz größer als ein zulässiger positiver Maximalwert RGL_DIFF_MAX ist. Falls das der Fall ist, wird bei S658 die Regeldifferenz auf diesen positiven Maximalwert gesetzt. Dies ist vor allem beim Anlauf wichtig, weil dort die Regeldifferenz sonst sehr groß würde.

Ist bei S656 die Antwort NEIN, so geht das Programm zum Schritt S660 und prüft dort, ob die Regeldifferenz kleiner als ein zulässiger maximaler negativer Wert -RGL_DIFF_MAX ist. Falls JA, wird bei S662 die Regeldifferenz auf diesen negativen Maximalwert gesetzt. (Dies betrifft den Fall, dass der Motor schneller ist als die gewünschte Drehzahl).

Auf die Schritte S658, S660 oder S662 folgt S664, wo die Rechenschritte eines PI-Reglers ausgeführt werden.

Hierzu wird die Regeldifferenz mit einem Proportionalfaktor RGL_P multipliziert, der z.B. den Wert 2 haben kann, und man erhält den Proportionalanteil RGL_PROP.

Ebenso wird die Regeldifferenz mit einem Integralfaktor RGL_I multipliziert, der z.B. 0,0625 betragen kann, und wird dann zum alten Integralanteil RGL_INT addiert, so dass man einen neuen Integralanteil erhält.

Schließlich wird die Länge BW eines Stromblocks 444 oder 446 (Fig. 18) berechnet als Summe von neuem Proportionalanteil und neuem Integralanteil.

Proportionalfaktor RGL_P und Integralfaktor RGL_I werden empirisch festgelegt, abhängig hauptsächlich von der Größe des Motors 30 und dem Trägheitsmoment der anzutreibenden Last.

Der PI-Regler S664 kann einen Stellwert BW liefern, dessen Betrag |BW| zu groß ist. Da dieser Betrag nicht größer sein darf als die Zeit T_HALL, die der Rotor 38 für das Durchlaufen von 180° el. benötigt, wird im nächsten Schritt S666 geprüft, ob BW zu groß ist, und ggf. wird die Blocklänge im Schritt S668 begrenzt, z.B. auf den augenblicklichen Wert T_HALL oder einen etwas kleineren Wert.

Wenn in S666 Die Antwort NEIN ist, geht die Routine S266 zum Schritt S670, wo geprüft wird, ob BW kleiner als -T_HALL ist. Falls JA, wird in S672 gesetzt

BW:= -T_HALL,

d.h. BW wird auf -T_HALL (oder einen dem Betrag nach etwas kleineren Wert) begrenzt. Das in S664 berechnete Vorzeichen (+ oder -) bleibt dabei bestehen.

Der Befehl "inv. 180°" schaltet also die Bestromung des Motors immer von der augenblicklichen Richtung in die entgegengesetzte Richtung um.

### Beispiel 1

Der Motor läuft, entsprechend dem Befehl DIR = 0, in Vorzugsrichtung. Der Befehl DIR = 1 wird gegeben. Die Bestromung wird dann durch "inv. 180°" so umgeschaltet, dass der Motor abgebremst und in der Reversrichtung angetrieben wird.

### Beispiel 2

Am Ende von Beispiel 1 läuft der Motor mit DIR = 1 in Reversrichtung. Der Motor erhält nun den Befehl DIR = 0. Auch jetzt wird durch einen Befehl "inv. 180°" die Bestromung umgeschaltet, und zwar so, dass der Motor abgebremst und anschließend wieder in Vorzugsrichtung angetrieben wird.

Für die Umschaltung der Bestromung ergibt sich bei der Ausführungsform nach Fig. 6 eine sehr einfache Möglichkeit, denn dort wird der OPV 52 vom Ausgang RB3 des $\mu$C 76 gesteuert, und der OP 54 wird vom Ausgang RB2 des $\mu$C 76 gesteuert.

Bei einer Umkehr der Bestromung wird im $\mu$C 76 eine Umschaltung vorgenommen dergestalt, dass die Kommutierungsimpulse, die bisher dem Ausgang RB3 zugeführt wurden, jetzt dem Ausgang RB2 zugeführt werden, und dass die Kommutierungsimpulse, die bisher dem Ausgang RB2 zugeführt wurden, jetzt dem Ausgang RB3 zugeführt werden.

Bei Motoren mit komplizierteren Schaltungen kann man auch die Signale an den Ausgängen RB2 und RB3 nach einem etwas anderen Schema berechnen, entsprechend den folgenden Formeln

$$t3 = t2 + T\_HALL + (T\_HALL - |BW|)/2 \qquad ...(11)$$

$$t4 = t1 + T\_HALL + (T\_HALL - |BW|)/2 \qquad ...(12)$$

Bei "inv. 180°" wird dann entweder von der Formel (7) auf die Formel (11) umgeschaltet, oder umgekehrt von der Formel (11) auf die Formel (7), und genau analog von der Formel (8) auf die Formel (12), oder umgekehrt von der Formel (12) auf die Formel (8).

Die Abschaltung erfolgt in allen Fällen bei (t3 + |BW|) bzw. bei (t4 + |BW|), so dass der Strom jeweils während einer Zeit |BW| fließt. Eine Vorzündung VZ kann, falls gewünscht, analog den Gleichungen (7) und (8) berücksichtigt werden.

Im Anschluss an S670 geht das Programm zu S674. Dort wird geprüft, welche Art von Befehl DIR vorliegt. Dieser Befehl kann sich naturgemäß vom aktuellen Zustand des Motors unterscheiden. Z.B. kann der Motor gerade im Augenblick den Befehl DIR = 0 erhalten haben, also Vorwärtslauf, aber der Motor läuft noch in Reversrichtung, weil der bisherige Befehl DIR = 1 war.

Ist DIR = 0, so bedeutet dies, dass der Befehl zum Lauf in Vorzugsrichtung vorliegt, und das Programm geht zu S676, wo das Vorzeichen des Stellwerts BW geprüft wird, was durch Prüfung von dessen höchstwertigem Bit MSB erfolgt, das den Wert 0 hat, wenn der Stellwert BW positiv ist.

Ist der in S664 berechnete Stellwert BW positiv, so bedeutet dies, dass der Strom in der richtigen Weise zugeführt wird, um den Motor in Vorzugsrichtung anzutreiben, und dass die Drehzahl nicht zu hoch wird, und deshalb wird der Stellwert BW unverändert dem Motor zugeführt, wie in S678 symbolisch angegeben. Dort ist das symbolisch ausgedrückt als |BW|-->MOT.

Wird in S676 festgestellt, dass der Stellwert ein negatives Vorzeichen hat, so bedeutet dies, dass entweder die Drehzahl des Motors zu hoch ist, wobei sich aber der Motor in Vorzugsrichtung dreht, oder dass der Motor im Augenblick in Reversrichtung angetrieben wird. In beiden Fällen geht das Programm zu S680, wo durch "inv. 180°" die Richtung der Bestromung umgeschaltet wird, wobei die Impulslänge durch die Größe des Stellwerts BW festgelegt wird. Dadurch wird entweder die Drehzahl des Motors (bei Drehung in Vorzugsrichtung) so lange reduziert, bis BW wieder positiv wird, oder die Drehrichtung wird reversiert, wodurch dann ebenfalls BW ein positives Vorzeichen erhält.

Ist in S674 die Antwort NEIN, so bedeutet dies den Befehl DIR = 1, also Lauf in Reversrichtung.

In diesem Fall wird in S682 das Vorzeichen des berechneten Stellwerts BW geprüft. Ist dieses Vorzeichen negativ, so bedeutet das, dass der Befehl DIR = 1 mit der augenblicklichen Drehrichtung des Motors übereinstimmt, d.h. der Motor läuft in Reversrichtung, und das Programm geht zu S684, wo der Motor unverändert mit dem berechneten Stellwert BW in Reversrichtung bestromt wird.

Lautet in S682 die Antwort NEIN, so bedeutet dies, dass der Stellwert BW ein positives Vorzeichen hat, d.h. entweder, dass die Drehzahl des Motors zu hoch ist, wobei sich der Motor in Reversrichtung dreht, oder dass der Motor im Augenblick in Vorzugsrichtung bestromt wird, also entgegengesetzt zum Befehl DIR = 1.

In beiden Fällen geht das Programm zu S686, wo die Richtung der Bestromung invertiert wird. Dadurch wird der Motor jetzt in einer zur bisherigen Bestromung entgegengesetzten Richtung bestromt, wodurch entweder seine Drehzahl soweit absinkt, bis der berechnete Stellwert BW wieder negativ wird, oder die Drehrichtung des Motors wird umgekehrt, so dass er mit der gewünschten Drehzahl in Reversrichtung läuft.

Die rechte Hälfte des Flussdiagramms der Fig. 19 (Schritte S676, 678, 680) betrifft also den Fall, dass der Motor den Befehl DIR = 0 zum Lauf in Vorzugsrichtung hat, und die linke Hälfte (Schritte S682, 684, 686) bedeutet, dass der Motor den Befehl DIR zum Lauf in Reversrichtung hat.

Anschließend an die Schritte S678, S680, S684 und S686 geht die Routine zu S688 (Return).

Durch die Routine der Fig. 19 erhält man also einen Stellwert BW, dessen Betrag um so kleiner wird, je mehr sich die tatsächliche Drehzahl dem gewünschten Wert $n_{soll}$ annähert. Das Vorzeichen des berechneten Stellwerts gibt dabei an, ob die Drehzahl zu hoch oder zu niedrig ist. Bei Überschreiten des Wertes $n_{soll}$ wird die Kommutierung auf Kommutierung entgegen der eingestellten Drehrichtung DIR umgeschaltet, so dass dann der Motor 30 geregelt auf die gewünschte Drehzahl $n_{soll}$ abgebremst wird, sofern letztere dem Betrag nach größer ist als die Mindestdrehzahl NMIN.

Besonders geeignet ist die Erfindung für den Antrieb von Lüftern, deren Drehrichtung umgeschaltet werden muss und bei denen die Drehzahl auch dann eingehalten werden muss, wenn z.B. durch Windstöße die Drehzahl des Lüfters erhöht wird. Eine andere Anwendung sind Antriebe von Rollläden, Jalousien und dergleichen. Ein großer Vorteil der Erfindung ist, dass sowohl für den Motor wie für die Elektronik die Kosten geringer sind als bei bisherigen Antrieben mit ähnlichen Funktionen.

**Patentansprüche**

1. Verfahren zur Drehzahlregelung eines mit einem Hilfsmoment (Fig. 13: $M_R$) arbeitenden zweipulsigen elektronisch kommutierten Motors (30), welcher mindestens einen Statorwicklungsstrang (32),
   einen Rotor (38)
   und eine Regeleinrichtung (76) für die Generierung eines Stellwerts (BW) zur Regelung des Motors (30) auf einen eine gewünschte Drehzahl ($n_{soll}$; t_s) charakterisierenden Wert aufweist,
   welches Verfahren folgende Schritte aufweist:

   Ein die tatsächliche Drehzahl (n) des Rotors (38) charakterisierender Wert wird fortlaufend erfasst;
   in einem unteren Drehzahlbereich (150) zwischen der Drehzahl Null und einer vorgegebenen Mindestdrehzahl ($+N_{MIN}$, $-N_{MIN}$) wird der Motor (30) mit einem von der gewünschten Drehzahl ($n_{soll}$; t_s) unabhängigen Strom betrieben;
   außerhalb dieses unteren Drehzahlbereichs (150) wird der Motor (30) mit einem Stellwert (BW) für den Strom betrieben, welcher eine Funktion der Regeldifferenz (Fig. 19: RGL_DIFF) zwischen einem die gewünschte Drehzahl ($n_{soll}$; t_s) charakterisierenden Wert und einem die tatsächliche Drehzahl charakterisierenden Wert (n; T_HALL) ist.

2. Verfahren nach Anspruch 1, bei welchem der Stellwert (BW) fortlaufend als Funktion der Regeldifferenz (Fig. 19: RGL_DIFF) berechnet, aber erst im Bereich des Erreichens der vorgegebenen Mindestdrehzahl ($+N_{MIN}$, $-N_{MIN}$) für den Regelvorgang verwendet wird.

3. Verfahren nach Anspruch 1 oder 2, bei welchem bei Erreichen einer Drehzahl (n) außerhalb des unteren Drehzahlbereichs und bevorzugt im Bereich der Mindestdrehzahl ($+N_{MIN}$, $-N_{MIN}$) ein Wert (Rt) für die augenblicklich vorgeschriebene Soll-Drehrichtung (DIR) des Rotors (38) gespeichert wird.

4. Verfahren nach einem der vorhergehenden Ansprüche, bei welchem bei Überschreiten der gewünschten Drehzahl ($n_{soll}$) die Kommutierung der Motorströme (i, i') auf eine Kommutierung umgeschaltet (inv. 180°) wird, welche einer Drehung des Rotors (38) entgegen seiner augenblicklichen Drehrichtung zugeordnet ist.

5. Verfahren nach Anspruch 4, bei welchem bei Überschreiten der gewünschten Drehzahl ($n_{soll}$) der Stellwert (BW) für den Motorstrom entsprechend der Differenz zwischen gewünschter Drehzahl ($n_{soll}$) und tatsächlicher Drehzahl (n) eingestellt wird, sofern die gewünschte Drehzahl ($n_{soll}$) höher ist als die Mindestdrehzahl ($+N_{MIN}$, $-N_{MIN}$) und ein Befehl zur Änderung der Drehrichtung nicht vorliegt.

6. Verfahren nach einem der vorhergehenden Ansprüche, bei welchem bei einem Befehl zur Änderung der Drehrichtung die Kommutierung der Motorströme (i, i') auf eine Kommutierung umgeschaltet (inv. 180°) wird, welche einer Drehung des Rotors (38) entgegen seiner augenblicklichen Drehrichtung zugeordnet ist,
und der Rotor (38) bis zum Erreichen der Drehzahl Null mit einem Strom gebremst wird, welcher von der gewünschten Drehzahl unabhängig ist.

7. Verfahren nach Anspruch 6, bei welchem nach Erreichen der Drehzahl Null die Drehzahl in der neuen Drehrichtung bis zum Erreichen einer vorgegebenen Mindestdrehzahl ($+N_{MIN}$, $-N_{MIN}$) mit einem von der gewünschten Drehzahl unabhängigen Stellwert (BW) erhöht wird,
und anschließend mit einem Stellwert (BW), der abhängig von der Differenz zwischen gewünschter Drehzahl ($n_{soll}$) und tatsächlicher Drehzahl (n) ist.

8. Verfahren nach Anspruch 6 oder 7, bei welchem dann, wenn nach einer Änderung der Drehrichtung ein Bereich außerhalb des unteren Drehzahlbereichs (150) erreicht wird, ein Wert (Rt) für die neue vorgeschriebene Drehrichtung (DIR) gespeichert wird.

9. Verfahren nach einem der vorhergehenden Ansprüche, bei welchem nach einem Startbefehl zum Anlauf in Reversrichtung (Fig. 13: DIR=1) zuerst eine Kommutierung für Drehung in der zur Reversrichtung entgegengesetzten Drehrichtung des Motors (30) erfolgt, in welcher der Motor (30) leicht anläuft,
und anschließend die Kommutierung auf Kommutierung in Reversrichtung (DIR=1) umgeschaltet wird.

10. Zweipulsiger elektronisch kommutierter Motor (30), welcher mit einem Reluktanz-Hilfsmoment (Fig. 13: $M_R$) arbeitet und welcher mindestens einen Statorwicklungsstrang (32), einen Rotor (38) und eine Regeleinrichtung (76) für die Erzeugung eines Stellwerts (BW) zur Regelung des Motors (30) auf eine gewünschte Drehzahl ($n_{soll}$) aufweist, welcher Regeleinrichtung eine Anordnung zur Erfassung einer für die Drehzahl des Rotors (38) charakteristischen Größe (T_HALL) zugeordnet ist,
und bei welcher in einem unteren Drehzahlbereich (Fig. 10: 150) zwischen der Drehzahl Null und einer vorgegebenen Mindestdrehzahl ($+N_{MIN}$, $-N_{MIN}$) der Motor (30) mit einem von der gewünschten Drehzahl ($n_{soll}$) unabhängigen Stellwert (BW=Max) betrieben wird,
und außerhalb dieses unteren Drehzahlbereichs (150) der Stellwert (BW) abhängig von der Differenz zwischen gewünschter Drehzahl ($n_{soll}$) und tatsächlicher Drehzahl (n) bestimmt wird.

11. Motor nach Anspruch 10, bei welchem der Stellwert (BW) fortlaufend als Funktion der Differenz zwischen gewünschter Drehzahl ($n_{soll}$) und tatsächlicher Drehzahl (n) berechnet (Fig. 19: S664), aber erst außerhalb des unteren Drehzahlbereichs (150) für einen Drehzahl-Regelvorgang verwendet wird.

12. Motor nach Anspruch 10 oder 11, bei welchem bei Erreichen einer Drehzahl außerhalb des unteren Drehzahlbereichs (150) ein Wert (Rt) für die augenblicklich vorgeschriebene Soll-Drehrichtung (DIR) des Motors (30) gespeichert wird.

**13.** Motor nach einem der Ansprüche 10 bis 12, bei welchem bei Überschreiten der gewünschten Drehzahl ($n_{soll}$) die Kommutierung der Motorströme auf eine Kommutierung umgeschaltet (inv. 180°) wird, welche einer Drehung des Rotors (38) entgegen seiner augenblicklichen Drehrichtung zugeordnet ist.

**14.** Motor nach Anspruch 13, bei welchem bei Überschreiten der gewünschten Drehzahl der Stellwert entsprechend der Differenz zwischen gewünschter Drehzahl ($n_{soll}$) und tatsächlicher Drehzahl (n) eingestellt wird, wenn die gewünschte Drehzahl größer ist als die vorgegebene Mindestdrehzahl (+$N_{MIN}$, -$N_{MIN}$), und ein Befehl zur Änderung der Drehrichtung nicht vorliegt, und die Kommutierung der Motorströme (i, i') auf eine Kommutierung umgeschaltet (inv. 180°) wird, welche einer Drehung des Rotors (38) entgegen seiner augenblicklichen Drehrichtung zugeordnet ist.

**15.** Motor nach einem der Ansprüche 10 bis 14, bei welchem bei einem Befehl zur Änderung der Drehrichtung die Kommutierung der Motorströme (i, i') auf eine Kommutierung umgeschaltet wird, welche einer Drehung des Rotors (38) entgegen seiner augenblicklichen Drehrichtung zugeordnet ist, so dass der Rotor (38) bis zum Erreichen der Drehzahl Null mit einem von der gewünschten Drehzahl ($n_{soll}$) unabhängigen Strom abgebremst und danach bis zum Erreichen der Mindestdrehzahl (+$N_{MIN}$, -$N_{MIN}$) in Gegenrichtung ebenfalls mit einem von der gewünschten Drehzahl ($n_{soll}$) unabhängigen Strom angetrieben wird.

**16.** Motor nach Anspruch 15, bei welchem außerhalb des unteren Drehzahlbereichs (150) der Antrieb in der neuen Drehrichtung mit einem Stellwert (BW) erfolgt, der abhängig von der Differenz zwischen gewünschter Drehzahl ($n_{soll}$) und tatsächlicher Drehzahl (n) ist.

**17.** Motor nach Anspruch 15 oder 16, bei welchem nach einer Drehrichtungsumkehr und nach Verlassen des unteren Drehzahlbereichs (150) ein Wert (Rt) für die neue vorgeschriebene Drehrichtung gespeichert wird.

**18.** Motor nach einem der Ansprüche 10 bis 17, welcher eine Vorzugsrichtung hat (Fig. 13: DIR=0), in der er leicht anläuft, und eine Reversrichtung (Fig. 13: DIR=1), in der sein Anlauf schwierig ist,
und bei welchem nach einem Startbefehl zum Anlauf in Reversrichtung zuerst eine Kommutierung für Drehung in Vorzugsrichtung erfolgt und dann auf Kommutierung für Reversrichtung umgeschaltet wird, um einen sicheren Anlauf in Reversrichtung zu erhalten (Fig.12).

**19.** Motor nach einem der Ansprüche 10 bis 18, bei welchem die Vorgabe einer gewünschten Drehzahl ($n_{soll}$), welche im unteren Drehzahlbereich (150) liegt, als Vorgabe einer gewünschten Drehzahl Null interpretiert wird.

**20.** Motor nach einem der Ansprüche 10 bis 19, bei welchem zur Charakterisierung der augenblicklichen Drehzahl des Motors ein Flag (Rs) vorgesehen ist, welches bei einer Drehzahl im unteren Drehzahlbereich (Fig. 10: 150) einen Wert (Rs=0) aufweist, der sich von einem Wert (Rs=1) unterscheidet, den dieses Flag (Rs) außerhalb des unteren Drehzahlbereichs (150) annimmt.

**Claims**

**1.** Method for regulating the rotational speed of a two-pulse electronically commutated motor (30) which works with an auxiliary torque (fig. 13: $M_R$) and comprises at least one stator phase winding (32), a rotor (38), and a regulating device (76) for generating a setting value (BW) for regulating the motor (30) to a value characterising a desired rotational speed ($n_{set}$; t_s), which method comprises the following steps:

a value characterising the actual rotational speed (n) of the rotor (38) is detected continuously;
in a lower rotational speed range (150) between the rotational speed of zero and a predetermined minimum rotational speed (+$N_{MIN}$, -$N_{MIN}$) the motor (30) is operated with a current which is independent of the desired rotational speed ($n_{set}$; t_s);
outside this lower rotational speed range (150) the motor (30) is operated with a setting value (BW) for the current which is a function of the control difference (fig. 19: RGL_DIFF) between a value characterising the desired rotational speed ($n_{set}$; t_s) and a value (n; T_HALL) characterising the actual rotational speed.

**2.** Method according to claim 1, in which the setting value (BW) is calculated continuously as a function of the control difference (fig. 19: RGL_DIFF), but only used for the regulating operation in the range of reaching the predetermined minimum rotational speed (+$N_{MIN}$, -$N_{MIN}$).

3. Method according to claim 1 or 2, in which on reaching a rotational speed (n) outside the lower rotational speed range and preferably in the range of the minimum rotational speed ($+N_{MIN}$, $-N_{MIN}$), a value (Rt) for the instantaneously prescribed set direction of rotation (DIR) of the rotor (38) is stored.

4. Method according to one of the preceding claims, in which on exceeding the desired rotational speed ($n_{set}$) the commutation of the motor currents (i, i') is switched (inv. 180°) to a commutation which is associated with rotation of the rotor (38) in the opposite direction to its instantaneous direction of rotation.

5. Method according to claim 4, in which on exceeding the desired rotational speed ($n_{set}$) the setting value (BW) for the motor current is set according to the difference between the desired rotational speed ($n_{set}$) and the actual rotational speed (n) provided the desired rotational speed ($n_{set}$) is higher than the minimum rotational speed ($+N_{MIN}$, $-N_{MIN}$) and no command to change the direction of rotation is present.

6. Method according to one of the preceding claims, in which in the presence of a command to change the direction of rotation the commutation of the motor currents (i, i') is switched (inv. 180°) to a commutation which is associated with rotation of the rotor (38) in the opposite direction to its instantaneous direction of rotation, and the rotor (38) is braked with a current which is independent of the desired rotational speed until it reaches the rotational speed of zero.

7. Method according to claim 6, in which on reaching the rotational speed of zero the rotational speed is increased in the new direction of rotation with a setting value (BW) independent of the desired rotational speed until a predetermined minimum rotational speed ($+N_{MIN}$, $-N_{MIN}$) is reached, and then with a setting value (BW) which is dependent on the difference between the desired rotational speed ($n_{set}$) and the actual rotational speed (n).

8. Method according to claim 6 or 7, in which on reaching a range outside the lower rotational speed range (150) after a change in the direction of rotation a value (Rt) for the new prescribed direction of rotation (DIR) is stored.

9. Method according to one of the preceding claims, in which after a start command to start in the reverse direction (fig. 13: DIR=1) first commutation takes place for rotation in the opposite direction of rotation of the motor (30) to the reverse direction in which the motor (30) starts easily, and then the commutation is switched to commutation in the reverse direction (DIR=1) .

10. Two-pulse electronically commutated motor (30) which works with an auxiliary reluctance torque (fig. 13: $M_R$) and which comprises at least one stator phase winding (32), a rotor (38) and a regulating device (76) for producing a setting value (BW) for regulating the motor (30) to a desired rotational speed ($n_{set}$), which regulating device has associated therewith an arrangement for detecting a variable (T_HALL) characteristic of the rotational speed of the rotor (38), and in which in a lower rotational speed range (fig. 10: 150) between the rotational speed of zero and a predetermined minimum rotational speed ($+N_{MIN}$, $-N_{MIN}$) the motor (30) is operated with a setting value (BW=Max) independent of the desired rotational speed ($n_{set}$), and outside this lower rotational speed range (150) the setting value (BW) is determined dependent on the difference between the desired rotational speed ($n_{set}$) and the actual rotational speed (n).

11. Motor according to claim 10, in which the setting value (BW) is calculated continuously as a function of the difference between the desired rotational speed ($n_{set}$) and the actual rotational speed (n) (fig. 19: S664), but is only used for a rotational speed regulating operation outside the lower rotational speed range (150).

12. Motor according to claim 10 or 11, in which on reaching a rotational speed outside the lower rotational speed range (150) a value (Rt) for the instantaneously prescribed set direction of rotation (DIR) of the motor (30) is stored.

13. Motor according to one of claims 10 to 12, in which on exceeding the desired rotational speed ($n_{set}$) the commutation of the motor currents is switched (inv. 180°) to a commutation which is associated with rotation of the rotor (38) in the opposite direction to its instantaneous direction of rotation.

14. Motor according claim 13, in which on exceeding the desired rotational speed the setting value is set according to the difference between the desired rotational speed ($n_{set}$) and the actual rotational speed (n) when the desired rotational speed is greater than the predetermined minimum rotational speed ($+N_{MIN}$, $-N_{MIN}$) and a command to change the direction of rotation is not present, and the commutation of the motor currents (i, i') is switched (inv. 180°) to a commutation which is associated with rotation of the rotor (38) in the opposite direction to its instantaneous direction of rotation.

**15.** Motor according to one of claims 10 to 14, in which in the presence of a command to change the direction of rotation the commutation of the motor currents (i, i') is switched to a commutation which is associated with rotation of the rotor (38) in the opposite direction to its instantaneous direction of rotation so that the rotor (38) is braked with a current which is independent of the desired rotational speed ($n_{set}$) until the rotational speed of zero is reached, and then driven also with a current which is independent of the desired rotational speed ($n_{set}$) in the opposite direction until the minimum rotational speed (+$N_{MIN}$, -$N_{MIN}$) is reached.

**16.** Motor according to claim 15, in which outside the lower rotational speed range (150) driving takes place in the new direction of rotation with a setting value (BW) which is dependent on the difference between the desired rotational speed ($n_{set}$) and the actual rotational speed (n).

**17.** Motor according to claim 15 or 16, in which after a reversal in the direction of rotation and after leaving the lower rotational speed range (150) a value (Rt) for the new prescribed direction of rotation is stored.

**18.** Motor according to one of claims 10 to 17, which has a preferential direction (fig. 13: DIR=0) in which it starts easily, and a reverse direction (fig. 13: DIR=1) in which its starting is difficult, and in which after a start command to start in the reverse direction first commutation takes place for rotation in the preferential direction and then is switched to commutation for the reverse direction in order to ensure reliable starting in the reverse direction (fig. 12).

**19.** Motor according to one of claims 10 to 18, in which the specification of a desired rotational speed ($n_{set}$) in the lower rotational speed range (150) is interpreted as specification of a desired rotational speed of zero.

**20.** Motor according to one of claims 10 to 19, in which to characterise the instantaneous rotational speed of the motor a flag (Rs) is provided which at a rotational speed in the lower rotational speed range (fig. 10: 150) has a value (Rs=0) which differs from a value (Rs=1) which this flag (Rs) adopts outside the lower rotational speed range (150).

**Revendications**

**1.** Procédé pour réguler la vitesse d'un moteur à commutation électronique à deux impulsions (30) fonctionnant avec un couple auxiliaire (fig. 13 : $M_R$), lequel présente au moins une phase d'enroulement statorique (32),
un rotor (38)
et un dispositif de régulation (76) pour la génération d'une valeur de réglage (BW) servant à régler le moteur (30) à une valeur caractérisant une vitesse de rotation souhaitée ($n_{soll}$ ; t_s),
lequel procédé présente les étapes suivantes :

une valeur caractérisant la vitesse de rotation réelle (n) du rotor (38) est saisie en continu ;
dans une plage de vitesse de rotation inférieure (150) comprise entre la vitesse de rotation nulle et une vitesse de rotation minimale donnée (+$N_{MIN}$, -$N_{MIN}$), le moteur (30) fonctionne avec un courant indépendant de la vitesse de rotation souhaitée ($n_{soll}$ ; t_s) ;
en dehors de cette plage de vitesse de rotation inférieure (150), le moteur (30) fonctionne avec une valeur de réglage (BW) pour le courant qui est une fonction de la différence de réglage (fig. 19 : RGL_DIFF) entre une valeur caractérisant la vitesse de rotation souhaitée ($n_{soll}$ ; t_s) et une valeur caractérisant la vitesse de rotation réelle (n ; T_HALL).

**2.** Procédé selon la revendication 1, dans lequel la valeur de réglage (BW) est calculée en continu comme fonction de la différence de réglage (fig. 19 : RGL_DIFF), mais utilisée pour le processus de régulation seulement au voisinage de l'atteinte de la vitesse de rotation minimale donnée (+$N_{MIN}$, -$N_{MIN}$).

**3.** Procédé selon la revendication 1 ou 2, dans lequel, à l'atteinte d'une vitesse de rotation (n) extérieure à la plage de vitesse de rotation inférieure et de préférence au voisinage de la vitesse de rotation minimale (+$N_{MIN}$, -$N_{MIN}$), on mémorise une valeur ($R_t$) pour le sens de rotation de consigne (DIR) actuellement prescrit du rotor (38).

**4.** Procédé selon l'une des revendications précédentes, dans lequel, en cas de dépassement de la vitesse de rotation souhaitée ($n_{soll}$), on change la commutation des courants de moteur (i, i') en une commutation (inv. 180°) qui est associée à une rotation du rotor (38) en sens inverse de son sens de rotation actuel.

**5.** Procédé selon la revendication 4, dans lequel, en cas de dépassement de la vitesse de rotation souhaitée ($n_{soll}$),

on règle la valeur de réglage (BW) pour le courant de moteur en fonction de la différence entre vitesse de rotation souhaitée ($n_{soll}$) et vitesse de rotation réelle (n) si la vitesse de rotation souhaitée ($n_{soll}$) est supérieure à la vitesse de rotation minimale ($+N_{MIN}$, $-N_{MIN}$) et s'il n'existe pas d'ordre de changement de sens de rotation.

6. Procédé selon l'une des revendications précédentes, dans lequel, en cas d'ordre de changement de sens de rotation, on change la commutation des courants de moteur (i, i') en une commutation (inv. 180°) qui est associée à une rotation du rotor (38) en sens inverse de son sens de rotation actuel et on freine le rotor (38) avec un courant qui est indépendant de la vitesse de rotation souhaitée jusqu'à l'atteinte de la vitesse de rotation nulle.

7. Procédé selon la revendication 6, dans lequel, après atteinte de la vitesse de rotation nulle, on augmente la vitesse de rotation dans le nouveau sens de rotation avec une valeur de réglage (BW) indépendante de la vitesse de rotation souhaitée jusqu'à l'atteinte d'une vitesse de rotation minimale donnée ($+N_{MIN}$, $-N_{MIN}$), et ensuite avec une valeur de réglage (BW) qui dépend de la différence entre vitesse de rotation souhaitée ($n_{soll}$) et vitesse de rotation réelle (n).

8. Procédé selon la revendication 6 ou 7, dans lequel, quand, après un changement de sens de rotation, on atteint une plage extérieure à la plage de vitesse de rotation inférieure (150), on mémorise une valeur ($R_t$) pour le nouveau sens de rotation prescrit (DIR).

9. Procédé selon l'une des revendications précédentes, dans lequel, après un ordre de démarrage en sens opposé (fig. 13 : DIR = 1), on effectue d'abord une commutation pour une rotation dans le sens de rotation du moteur (30) inverse au sens opposé, dans lequel le moteur (30) démarre facilement, et on change ensuite la commutation en commutation en sens opposé (DIR = 1).

10. Moteur à commutation électronique à deux impulsions (30), lequel fonctionne avec un couple auxiliaire de réluctance (fig. 13 : $M_R$) et lequel présente au moins une phase d'enroulement statorique (32), un rotor (38) et un dispositif de régulation (76) pour la génération d'une valeur de réglage (BW) servant à régler le moteur (30) à une valeur caractérisant une vitesse de rotation souhaitée ($n_{soll}$), auquel dispositif de régulation est associé un dispositif de saisie d'une grandeur (T_HALL) caractéristique de la vitesse de rotation du rotor (38), et dans lequel, dans une plage de vitesse de rotation inférieure (fig. 10 : 150) comprise entre la vitesse de rotation nulle et une vitesse de rotation minimale donnée ($+N_{MIN}$, $-N_{MIN}$), le moteur (30) fonctionne avec une valeur de réglage (BW = Max) indépendante de la vitesse de rotation souhaitée ($n_{soll}$), et, en dehors de cette plage de vitesse de rotation inférieure (150), la valeur de réglage (BW) est déterminée en fonction de la différence entre vitesse de rotation souhaitée ($n_{soll}$) et vitesse de rotation réelle (n).

11. Moteur selon la revendication 10, dans lequel la valeur de réglage (BW) est calculée en continu comme fonction de la différence entre vitesse de rotation souhaitée ($n_{soll}$) et vitesse de rotation réelle (n) (fig. 19 : S664), mais utilisée pour un processus de régulation de la vitesse de rotation seulement en dehors de la plage de vitesse de rotation inférieure (150).

12. Moteur selon la revendication 10 ou 11, dans lequel, à l'atteinte d'une vitesse de rotation extérieure à la plage de vitesse de rotation inférieure (150), on mémorise une valeur ($R_t$) pour le sens de rotation de consigne (DIR) actuellement prescrit du moteur (30).

13. Moteur selon l'une des revendications 10 à 12, dans lequel, en cas de dépassement de la vitesse de rotation souhaitée ($n_{soll}$), on change la commutation des courants de moteur en une commutation (inv. 180°) qui est associée à une rotation du rotor (38) en sens inverse de son sens de rotation actuel.

14. Moteur selon la revendication 13, dans lequel, en cas de dépassement de la vitesse de rotation souhaitée, on règle la valeur de réglage en fonction de la différence entre vitesse de rotation souhaitée ($n_{soll}$) et vitesse de rotation réelle (n) si la vitesse de rotation souhaitée est supérieure à la vitesse de rotation minimale donnée ($+N_{MIN}$, $-N_{MIN}$) et s'il n'existe pas d'ordre de changement de sens de rotation, et on change la commutation des courants de moteur (i, i') en une commutation (inv. 180°) qui est associée à une rotation du rotor (38) en sens inverse de son sens de rotation actuel.

15. Moteur selon l'une des revendications 10 à 14, dans lequel, en cas d'ordre de changement de sens de rotation, on change la commutation des courants de moteur (i, i') en une commutation qui est associée à une rotation du rotor (38) en sens inverse de son sens de rotation actuel, de sorte que le rotor (38) est freiné avec un courant qui est indépendant de la vitesse de rotation souhaitée ($n_{soll}$) jusqu'à l'atteinte de la vitesse de rotation nulle et ensuite entraîné dans le sens inverse également avec un courant indépendant de la vitesse de rotation souhaitée ($n_{soll}$) jusqu'à l'atteinte de la vitesse de rotation minimale ($+N_{MIN}$, $-N_{MIN}$).

16. Moteur selon la revendication 15, dans lequel, en dehors de la plage de vitesse de rotation inférieure (150), l'entraînement dans le nouveau sens de rotation est réalisé avec une valeur de réglage (BW) qui dépend de la différence entre vitesse de rotation souhaitée ($n_{soll}$) et vitesse de rotation réelle (n).

17. Moteur selon la revendication 15 ou 16, dans lequel, après une inversion du sens de rotation et après avoir quitté la plage de vitesse de rotation inférieure (150), on mémorise une valeur ($R_t$) pour le nouveau sens de rotation prescrit.

18. Moteur selon l'une des revendications 10 à 17, lequel a un sens de rotation préférentiel (fig. 13 : DIR = 0) dans lequel il démarre facilement et un sens de rotation opposé (fig. 13 : DIR = 1) dans lequel son démarrage est difficile, et dans lequel, après un ordre de démarrage en sens opposé, on effectue d'abord une commutation pour une rotation en sens préférentiel et on passe ensuite en commutation pour le sens opposé afin d'obtenir un démarrage sûr en sens opposé (fig. 12).

19. Moteur selon l'une des revendications 10 à 18, dans lequel la spécification d'une vitesse de rotation souhaitée ($n_{soll}$) qui se situe dans la plage de vitesse de rotation inférieure (150) est interprétée comme la spécification d'une vitesse de rotation souhaitée nulle.

20. Moteur selon l'une des revendications 10 à 19, dans lequel, pour caractériser la vitesse de rotation actuelle du moteur, il est prévu un drapeau (Rs) qui, à une vitesse de rotation située dans la plage de vitesse de rotation inférieure (fig. 10 : 150), présente une valeur (Rs = 0) qui diffère d'une valeur (Rs = 1) que ce drapeau (Rs) prend en dehors de la plage de vitesse de rotation inférieure (150).

Fig. 1

EP 1 535 388 B1

Fig. 2

Fig.3

Fig.4

Fig.5

Fig. 6

EP 1 535 388 B1

Fig.7

Fig.8

Fig.9

Fig. 10

EP 1 535 388 B1

Fig. 11

$192$

$(T\_HALL-EW)$

$DIR=1$

$DIR=0$

$T\_HALL < TG$

$540°el$

$194$

$190$

$DIR=0$

N

S        S        $106$

$38$

$360°el$

N

$0°el$ $(720°el.)$

$180°el$

## Fig.12

$M_R$

$DIR=1$

$DIR=0$

$196$    $198$

$200$

$\propto [°]$

$T\_HALL$        $(T\_HALL-EW)$?

$202$

## Fig.13

Fig. 14

```
                    ┌─────────────────┐
                    │                 │
                    │  Motor Status   │────── S 220
                    │                 │
                    └────────┬────────┘
                             │
                    ┌────────┴────────┐
                    │                 │
                    │  Rs alt : = Rs  │────── S 222
                    │                 │
                    └────────┬────────┘
                             │
      S 224                  ▼
         ╲         ╱◇─────────────────◇╲
          ╲      ╱    |n| ≥ |NMIN|?      ╲
       y   ╲   ╱                          ╲   N
      ┌─────◇────────────────────────────────◇─────┐
      │      ╲                            ╱          │
      ▼        ╲                        ╱            ▼
  S 226          ◇──────────────────◇          S 228
  ┌────────────────┐            ┌────────────────┐
  │                │            │                │
  │    Rs:=1       │            │    Rs:=0       │
  │                │            │                │
  └───────┬────────┘            └───────┬────────┘
          │                             │
          │                             │
          └──────────────►◄─────────────┘
                         │              S 230
                         ▼
              ╱◇───────────────────◇╲
       y    ╱                         ╲   N
      ┌───◇      Rs alt = Rs ?          ◇───┐
      │    ╲                          ╱     │
      │      ◇───────────────────◇          │
      │                │                    │
      │  S 234         ▼                    │
      │     ╲   ╱◇──────────────◇╲          │
      │  N   ╲ ╱                   ╲  y   ┌──────────────┐  S 236
      │   ┌───◇   Rs alt = 0?       ◇────►│              │──┘
      │   │    ╲                  ╱       │  Rt:= DIR    │
      │   │      ◇──────────────◇         │              │
      │   │                               └──────┬───────┘
      │   │                                      │
      │   │                               ┌──────┴───────┐  S 238
      │   │                               │              │──┘
      │   │                               │    RGL       │
      │   └───────────────────┐           │              │
      │                       │           └──────┬───────┘
      └───────────────────────┤                  │
                              ▼◄─────────────────┘
                    ┌─────────────────┐
                    │                 │
                    │    Return       │
                    │                 │────── S 232
                    └─────────────────┘
```

*Fig. 15*

31

DISCR — S250

S252
"nSoll" NEW?
N          Y

S258
"n" NEW?
N          Y

S254
STORE nSoll

S256
nSoll NEWFLG = 1

S260
STORE n

S262
n NEWFLG = 1

S264
n NEWFLG = 1
&
nSoll NEWFLG =1?
Y          N

S266
RGL

S268
n NEWFLG = 0
nSoll NEWFLG = 0

A

*Fig. 16*

**A**

S 272

|nSoll|≥|NMIN|?

S 280

DIR=0?

S 282

DIR = 0
BW=MAX

S 290

DIR=0
BW=MAX

S 292

T_HALL<TG

S 284

|n|≥|NMIN|?

S 294

START TIMER
(TG - EW)

S 286

DIR=Rt

S 296

TIMER=0?

S 288

Rs=1

S 298

DIR=1
BW=MAX

S 274

|n|≥|NMIN|?

S 289

BW-->MOT
(Accel.)

S 275

BW-->MOT
(Decel.)

Rs=0

S 276

BW=0   S 277

Return   S 278

*Fig. 17*

Fig. 18

RGL — S266

RGL_DIFF := T_HALL - t_s — S654

RGL_DIFF >= RGL_DIFF_MAX? — S656
Y → RGL_DIFF := RGL_DIFF_MAX — S658

N

RGL_DIFF <= -RGL_DIFF_MAX? — S660
Y → RGL_DIFF := -RGL_DIFF_MAX — S662

N

RGL_PROP := RGL_DIFF * RGL_P
RGL_INT := RGL_INT + RGL_DIFF * RGL_I
BW := RGL_PROP + RGL_INT — S664

BW >= T_HALL ? — S666
Y → BW := T_HALL — S668

N

BW <= - T_HALL ? — S670
Y → BW := -T_HALL — S672

N

DIR = 0 ? — S674
N                           Y

BW < 0 ? — S682              BW > 0 ? — S676
N        Y                  N        Y

|BW|→mot    |BW|→mot         |BW|→mot    |BW|→mot
inv. 180°               inv. 180°
S686      S684    S680         S678

Return — S688

*Fig. 19*